(19) Europäisches Patentamt
European Patent Office
Office européen des brevets

(11) EP 2 657 260 B1

(12) **EUROPEAN PATENT SPECIFICATION**

(45) Date of publication and mention of the grant of the patent:
**09.11.2016 Bulletin 2016/45**

(21) Application number: **11851416.5**

(22) Date of filing: **22.12.2011**

(51) Int Cl.:
***C08F 4/78*** $^{(2006.01)}$ ***C08F 4/69*** $^{(2006.01)}$
***C08F 10/00*** $^{(2006.01)}$

(86) International application number:
**PCT/JP2011/079872**

(87) International publication number:
**WO 2012/086780 (28.06.2012 Gazette 2012/26)**

(54) **POLYETHYLENE HAVING IMPROVED BRANCHING DEGREE DISTRIBUTION**

POLYETHYLEN MIT VERBESSERTER VERZWEIGUNGSGRADVERTEILUNG

POLYÉTHYLÈNE AYANT UNE DISTRIBUTION DU DEGRÉ DE RAMIFICATION AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2010 JP 2010287401**

(43) Date of publication of application:
**30.10.2013 Bulletin 2013/44**

(73) Proprietor: **Japan Polyethylene Corporation**
**Tokyo 100-8251 (JP)**

(72) Inventors:
- **KUZUBA, Yuuichi**
  **Kanagawa (JP)**
- **MONOI, Takashi**
  **Kanagawa (JP)**
- **KANAZAWA, Satoshi**
  **Kanagawa (JP)**
- **OGAWA, Kouichi**
  **Kanagawa (JP)**
- **HATTORI, Takaaki**
  **Kanagawa (JP)**
- **YOSHIMOTO, Keiichi**
  **Kanagawa (JP)**

(74) Representative: **Hoffmann Eitle**
**Patent- und Rechtsanwälte PartmbB**
**Arabellastraße 30**
**81925 München (DE)**

(56) References cited:
**EP-A1- 2 447 287** **WO-A1-2010/150410**
**JP-A- 6 199 920** **JP-A- 2001 181 319**
**JP-A- 2005 298 811** **JP-A- 2009 173 889**
**JP-A- 2010 280 897** **US-B1- 6 525 148**

- **PAUL J. DESLAURIERS ET AL: "A comparative study of multimodal vs. bimodal polyethylene pipe resins for PE-100 applications", POLYMER ENGINEERING & SCIENCE, vol. 45, no. 9, 1 September 2005 (2005-09-01), pages 1203-1213, XP055124764, ISSN: 0032-3888, DOI: 10.1002/pen.20390**
- **PAUL J. DESLAURIERS ET AL: "Short chain branching profiles in polyethylene from the Phillips Cr/silica catalyst", JOURNAL OF POLYMER SCIENCE PART A: POLYMER CHEMISTRY, vol. 45, no. 15, 1 August 2007 (2007-08-01), pages 3135-3149, XP055124768, ISSN: 0887-624X, DOI: 10.1002/pola.22174**

EP 2 657 260 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to novel polyethylene having improved branching degree distribution, and in more detail, to polyethylene having an excellent moldability and impact resistance and an excellent balance between rigidity (density) and durability (FNCT), produced using a chromium catalyst (particularly a dialkylaluminum alkoxide compound-supported chromium catalyst). Particularly, the invention relates to polyethylene suitable for a hollow plastic molding, and polyethylene having high rigidity and durability (excellent in balance between both properties).

### Background Art

Hollow plastic molding used in storage or transportation of a liquid substance is widely used in daily life and industrial field. Particularly, the hollow plastic molding used as a fuel tank in automobile parts is being substituted for the conventional metal fuel tank. Furthermore, at present, plastic is a material most widely used in the production of transporting vessels such as a fuel tank and a plastic bottle of combustible liquid, harmful substance and the like. The plastic vessel and tank have low weight/volume ratio as compared with metal vessel and tank, and therefore have the characteristics that reduction in weight is possible, corrosion such as rust is difficult to occur, and impact resistance is good. Thus, the plastic vessel and tank are acquiring wide uses more and more.
The hollow plastic molding is mainly obtained from high density polyethylene (HDPE) by blow molding in many cases. Furthermore, in a plastic fuel tank for automobiles obtained from polyethylene, care must be taken to particularly requirements becoming problems. The plastic fuel tank is classified into important security parts for securing safety of automobiles, and is therefore required to have particularly high level in mechanical strength, durability and impact resistance. Therefore, material development for enhancing those in sufficiently high level is desired.
Technologies heretofore proposed as polyethylene for a hollow plastic molding and a method for producing the same are as follows.
A hollow plastic product obtained from polyethylene produced using an inorganic oxide-supported chromium catalyst having been subjected to fluorine treatment is disclosed (see Patent Document 1).
However, short chain branching distribution of polyethylene is not disclosed in the prior application, and it is hard to say that polyethylene having sufficient level of durability, suitable for a hollow plastic molding, particularly a fuel tank for automobiles, is disclosed.
Furthermore, a method for producing polyethylene by adding an organoaluminum compound as a cocatalyst to a polymerization reactor and using a chromium catalyst (see Patent Document 2), and a method for controlling flowability (melt index) of polyethylene by the amount of hydrogen added during polymerization when a dialkylaluminum alkoxide compound-supported chromium catalyst is used as an ethylene polymerization catalyst (see Patent Document 3) are disclosed.
However, Patent Documents 2 and 3 do not disclose short chain branching distribution of polyethylene, and furthermore do not disclose impact resistance and durability of polyethylene obtained.
Regarding polyethylene, a method for producing polyethylene suitable for a blow-molded article, particularly a large-sized blow-molded article, by conducting polymerization using a trialkylaluminum compound-supported chromium catalyst while coexisting hydrogen is proposed (see Patent Document 4). The Document 4 further discloses a method for producing polyethylene using an dialkylaluminum alkoxide compound-supported chromium catalyst (Comparative Example 13).
A catalyst for ethylene polymerization comprising a solid chromium catalyst component comprising an inorganic oxide support having supported thereon a chromium compound in which at least a part of chromium atoms converts into hexavalent atoms by activation by calcining in a non-reducing atmosphere, a dialkylaluminum functional group-containing alkoxide, and trialkylaluminum is proposed (see Patent Document 5). It is further disclosed therein that the polyethylene obtained in such a case is preferable for blow-molded article having excellent creep resistance and environmental stress cracking resistance (ESCR) and having from 1 to 100 g/10 min of HLMFR and from 0.935 to 0.955 g/cm$^3$ of a density.
A method for producing polyethylene using a chromium catalyst obtained by supporting in an inert hydrocarbon solvent a specific organoaluminum compound (alkoxide, siloxide, phenoxide or the like) on a chromium compound-supported inorganic oxide support in which the chromium compound is supported on the inorganic oxide support and activated by calcining in a non-reducing atmosphere to convert at least a part of chromium atoms into hexavalent atoms (see Patent Document 6) is proposed. It is further disclosed therein that the polyethylene obtained in such a case has good balance between rigidity and ESCR.
Furthermore, a catalyst for polyethylene production comprising a chromium catalyst in which a chromium compound is supported on an inorganic oxide support, and activated by calcining in a non-reducing atmosphere to

convert at least a part of chromium atoms into hexavalent atoms, and a specific organoaluminum compound (alkoxide, siloxide or the like) (see Patent Document 7) is proposed. It is disclosed therein that the polyethylene obtained in such a case has excellent ESCR or creep resistance.

A method for producing polyethylene comprising, when continuously conducting multistage copolymerization of ethylene alone or ethylene and $\alpha$-olefin having from 3 to 8 carbon atoms by a plurality of polymerization reactors connected in series using a chromium catalyst in which a chromium compound is supported on an inorganic oxide support and activated by calcining in a non-reducing atmosphere to convert at least a part of chromium atoms to hexavalent atoms, introducing a specific organoaluminum compound (alkoxide, siloxide or the like) in any one or all of the polymerization reactors (see Patent Document 8) is proposed. It is further disclosed therein that the polyethylene obtained in such a case has excellent ESCR and creep resistance.

An ethylene polymerization catalyst comprising a fluorinated chromium compound in which at least a part of chromium atoms converts into hexavalent atoms by activating in a non-reducing atmosphere, and a specific organoboron compound supported thereon is proposed (see Patent Document 9), and the Document 9 further discloses a method for producing polyethylene using a chromium catalyst that supports at least one of trialkylaluminum and a dialkylaluminum alkoxide compound (Comparative Examples 6 and 8).

However, Patent Documents 4 to 9 do not disclose short chain branching distribution of polyethylene, and furthermore, it is hard to say that polyethylene having sufficient level of durability suitable for a hollow plastic molding, particularly a fuel tank for automobiles, is disclosed.

Patent Document 10 discloses polyethylene in which a high load melt flow rate is from 1 to 10 g/10 min, a density is from 0.940 to 0.960 g/cm$^3$, a strain hardening parameter of elongational viscosity shows a specific value, Charpy impact strength is 8 kJ/cm$^2$ or more, and rupture time in a full notch tensile creep test and a density satisfy a specific formula, by using a chromium catalyst having supported thereof at least one of trialkyl aluminum and a dialkylaluminum alkoxide compound and conducting polymerization while coexisting hydrogen. However, the prior application does not disclose short chain branching distribution of polyethylene.

Patent Document 11 discloses that short chain branching distribution is improved by polymerizing with a catalyst containing silylchromate as a catalyst component (Patent Document 11, Fig. 1). However, the polyethylene disclosed here has small density and is not suitable for a fuel tank for automobiles.

Patent Documents 12, 13 and 14 disclose polyethylene having uniform short chain branching distribution produced by using aluminum phosphate as a support of a chromium catalyst. Uniformity of the short chain branching distribution leads to the improvement in balance of physical properties. However, the polyethylene disclosed here has wide molecular weight distribution and is not suitable for a fuel tank for automobiles.

Furthermore, Non-Patent Documents 1 and 2 disclose polyethylene having uniform short chain branching distribution obtained from a supported chromium catalyst by using aluminum phosphate or titania, not silica, as a support. However, the polyethylene disclosed is not for use in a fuel tank for automobiles, and there are no suggestion and disclosure as to whether or not the polyethylene is suitable for a fuel tank for automobiles.

Other than the above, for example, high density polyethylene "HB111R", manufactured by Japan Polyethylene Corporation, and high density polyethylene "4261AG", manufactured by Basell, are known as the commercially available polyethylene used in a fuel tank for automobiles.

Those are materials that have respond to severe requests of automobile manufacturers and got evaluation in the market. However, further improvement in level of balance between rigidity and durability, impact resistance and moldability is desired.

Patent Document

Patent Document 1: JP-T-2004-504416 (the term "JP-T" as used herein means a published Japanese translation of a PCT patent application)
Patent Document 2: JP-T-2006-512454
Patent Document 3: WO94/13708
Patent Document 4: JP-A-2002-080521
Patent Document 5: JP-A-2002-020412
Patent Document 6: JP-A-2003-096127
Patent Document 7: JP-A-2003-183287
Patent Document 8: JP-A-2003-313225
Patent Document 9: JP-A-2006-182917
Patent Document 10: JP-A-2009-173889
Patent Document 11: WO00/61645

Patent Document 12: US Patent 6,867,278
Patent Document 13: US Patent 6,875,835
Patent Document 14: US Patent 6,525,148

Non-Patent Document

Non-Patent Document 1: Polym. Eng. Sci., Vol. 45, 1203 (2005)
Non-Patent Document 2: J. Polym. Sci., Part A Polym. Chem., Vol. 45, 3135 (2007)

Summary of the Invention

Problems that the Invention is to Solve

Under the circumstances as above, development of polyethylene that dissolves the problems in the conventional polyethylene, has excellent moldability and impact resistance, has excellent balance between rigidity and durability, and can achieve particularly excellent rigidity improvement, and a hollow plastic molding, particularly polyethylene suitable for high performance fuel tank, is desired.

In view of the problems in the conventional technologies described above, an object of the present invention is to provide polyethylene having excellent moldability and impact resistance, and excellent balance between rigidity and durability.

Means for Solving the Problems

As a result of intensive investigations to achieve the above object, the present inventors have found that polyethylene having specific properties, particularly polyethylene obtained by conducting polymerization using a dialkylaluminum alkoxide compound-supported chromium catalyst, has improved short chain branching distribution as compared with the conventional polyethylene, and as a result, the polyethylene has excellent moldability and impact resistance, and excellent balance between rigidity and durability, and is particularly suitable for a hollow plastic molding by blow molding, and have reached the present invention based on those findings.

That is, according to a first aspect of the present invention, polyethylene is provided which is polymerized using a chromium catalyst, and has a ratio (Mw/ Mn) of a weight average molecular weight (Mw) to a number average molecular weight (Mn) of 20 to 40 and a weight average molecular weight (Mw) of 30,000 or more at the maximum value in a branching degree distribution curve that shows a molecular weight dependency of short chain branches having 4 or more carbon atoms, wherein the chromium catalyst is obtained by calcining and activating an inorganic oxide support having a chromium compound supported thereon at from 400 to 900°C in a non-reducing atmosphere to convert at least a part of chromium atoms into hexavalent atoms, supporting dialkylaluminum alkoxide in an inert hydrocarbon solvent, and removing the solvent and drying, and the number of short chain branches having 4 or more carbon atoms per 1,000 carbons in the main chain of the polyethylene is 3.0 or less, and the branching degree distribution curve is that when a relative ratio of the number of branches having 4 or more carbon atoms in a fraction having Mw of from 8,000 to 15,000 is Xa, and a relative ratio of the number of branches having 4 or more carbon atoms in a fraction having Mw of from 200,000 to 400,000 is Xb, those relative ratios satisfy the following formulae (A) and (B), respectively:

$$0.60 \leq Xa \leq 1.20 \qquad (A)$$

$$0.80 \leq Xb \leq 1.40 \qquad (B)$$

Also, according to a second aspect of the present invention, the polyethylene according to the first aspect, having a density of from 0.940 to 0.960 g/cm$^3$, is provided.

Also, according to a third aspect of the present invention, the polyethylene according to of the first or second aspect, wherein the number of short chain branches having 4 or more carbon atoms per 1,000 carbons in main chain is 3.0 or less, is provided.

Also, according to a fourth aspect of the present invention, the polyethylene according to the first aspect, wherein in the chromium catalyst, a molar ratio of dialkylaluminum alkoxide to chromium atoms is from 0.5 to 10.0, is provided.

Also, according to a fifth aspect of the present invention, the polyethylene according to the first aspect, wherein the inorganic oxide support is silica, is provided.
Also, according to a sixth aspect of the present invention, a hollow plastic molding comprising the polyethylene according to any one of the first to fifth aspect is provided.
Further, also, according to a seventh aspect of the present invention, the hollow plastic molding according to the sixth aspect, which is at least one selected from the group consisting of a fuel tank, a kerosene can, a drum, a container for chemicals, an agricultural container, a container for solvent and a plastic bottle, is provided.

Advantage of the Invention

The polyethylene of the present invention has excellent moldability and impact resistance and excellent balance between rigidity and durability. Therefore, the polyethylene is preferable for use in tanks such as a fuel tank, cans, containers, bottles, and the like, particularly a fuel tank for automobiles.

Brief Description of the Drawings

Fig. 1 is a view showing molecular weight dependency of relative amount of the number of branches.
Fig. 2 is a view showing the relationship between a density and FNCT (full notch tensile creep test).
Fig. 3 is a view showing the relationship between a density and FNCT (full notch tensile creep test).

Mode for Carrying Out the Invention

The present invention relates to novel polyethylene having the following characteristics. The present invention is described in detail below in every item.

[I] Polyethylene

The polyethylene of the present invention is polyethylene having a weight average molecular weight (Mw) of 30,000 or more at the maximum value in a branching degree distribution curve that shows a molecular weight dependency of short chain branch having 4 or more carbon atoms. The short chain branch in the branching degree distribution curve has 4 or more carbon atoms, and has generally 20 or less carbon atoms.

(1) Weight average molecular weight (Mw) at maximum value in branching degree distribution curve that shows a molecular weight dependency of short chain branch having 4 or more carbon atoms

The polyethylene of the present invention has a weight average molecular weight (Mw) of 30,000 or more, and preferably 35,000 or more, at the maximum value in a branching degree distribution curve that shows a molecular weight dependency of short chain branch having 4 or more carbon atoms. The weight average molecular weight (Mw) is generally 10,000,000 or less. The branching degree distribution curve showing molecular weight dependency of short chain branch having 4 or more carbon atoms is obtained by subjecting the polyethylene of the present invention to molecular weight fractionation, measuring short chain branches of each fraction fractionated with $^{13}$C-NMR, and plotting relative ratio of the number of short chain branches of each fraction to the number of short chain branches of the whole polyethylene, to a weight average molecular weight of each fraction.
When the weight average molecular weight (Mw) at the maximum value in the branching degree distribution curve has 30,000 or more, more short chain branches are incorporated in a high molecular weight side in molecular weight distribution, and the balance between rigidity and durability is remarkably improved. The above requirement can be achieved by selecting a polymerization catalyst and polymerization conditions.
General method of molecular weight fractionation method is described below.
Fractionation column uses a column filled with appropriate filler generally used depending on a component to be fractionated. The filler used here is not particularly limited so long as it is an inert filler insoluble in a solvent. Generally, fillers having a particle diameter of from about 50 to 400 meshes such as sea sand, celite or glass beads are preferably used.
Shape and size of the fractionation column are not particularly limited. For example, a cylindrical stainless steel column having a diameter of from 10 to 100 mm and a length of from 100 to 1,000 mm is preferably used.
Good solvent is not particularly limited. p-xylene (boiling point: 138°C), tetralin (boiling point: 207°C), orthodichlorobenzene (boiling point: 180°C), trichlorobenzene (boiling point: 218°C) and the like in which polyethylene dissolves

at a boiling point or lower of a solvent are used.

Furthermore, poor solvent is not particularly limited. Ethylene glycol monoethyl ether (ethyl cellosolve) (boiling point: 162°C), ethylene glycol monobutyl ether (butyl cellosolve) (boiling point: 171°C) and the like that have a boiling point higher than that of the good solvent and arbitrarily dissolve in the good solvent are used.

One kind is selected from each of the good solvent and the poor solvent, and those are used as a mixed solvent. Combination of p-xylene and butyl cellosolve is generally used.

Flow rate of the mixed solvent sent to the fractionation column is from 1.0 to 30.0 ml/min, and preferably from 5.0 to 25.0 ml/min. Where the flow rate is less than 1.0 ml/min, the fractionation takes much time, which is not efficient. Furthermore, recrystallization occurs in piping during fractionation, leading to clogging, and there is a possibility that the subsequent fractionation stops. On the other hand, where the flow rate exceeds 30.0 ml/min, molecular weight distribution spreads, and sufficient molecular weight fractionation is not conducted.

Where column temperature is a temperature lower than 115°C, fractionation by composition (crystallinity) occurs, and molecular weight distribution spreads, which are not preferred. Furthermore, where the column temperature is the vicinity of a boiling point or higher than a boiling point of the good solvent, the solvent boils, the sample is removed from the filler, sufficient elution by molecular weight is not conducted, the relationship between molecular weight and solvent composition reverses, and the molecular weight is rapidly changed. As a result, the intended molecular weight component cannot be fractionated.

Specific method of the molecular weight fractionation method is that a polymer sample (1.5 g) and BHT (10 mg) are dissolved in xylene (400 ml) at 135°C using celite (60 g) as a support, butyl cellosolve (200 ml) is added, the resulting slurry is packed into a column, the liquid in the column is completely substituted with butyl cellosolve, and mixed solvents of butyl cellosolve/xylene=100/0, 80/20, 70/30, 60/40, 55/45, 50/50 and 0/100 are sequentially flown through the column at 125°C, thereby fractionating in the order of from low molecular weight liquid to high molecular weight liquid. Acetone is added to each of the liquids fractionated to precipitate a polymer sample and recover the same, followed by drying. Using the dried sample, the number of short chains of a butyl group or more can be measured by $^{13}$C-NMR. Furthermore, a molecular weight (Mw) can be measured by measuring the fractionated sample with GPC. Specific example of a branching degree distribution curve in which the molecular weight (Mw) obtained by GPC is shown in a horizontal axis and a relative value of short chain branches of butyl group or more is shown in a vertical axis is shown in Fig. 1.

(2) Relative ratio of short chain branch in each Mw of branching degree distribution curve

In addition to the above requirement, when the number of short chain branches having 4 or more carbon atoms of the whole polyethylene before conducting molecular weight fractionation is 1.0 as a standard value, a relative ratio of the number of branches having 4 or more carbon atoms in a fraction having Mw of from 8,000 to 15,000 is Xa, and a relative ratio of the number of branches having 4 or more carbon atoms in a fraction having Mw of from 200,000 to 400,000 is Xb, those relative ratios preferably satisfy the following formulae (A) and (B), respectively.

$$0.60 \leq Xa \leq 1.20 \quad (A)$$

$$0.80 \leq Xb \leq 1.40 \quad (B)$$

More preferably, Xa and Xb satisfy the following formula (C) and (D), respectively.

$$0.60 \leq Xa \leq 1.15 \quad (C)$$

$$0.85 \leq Xb \leq 1.40 \quad (D)$$

Still more preferably, Xa and Xb satisfy the following formula (E) and (F), respectively.

$$0.60 \leq Xa \leq 1.10 \quad (E)$$

$$0.90 \leq Xb \leq 1.40 \quad (F)$$

Assignment of chemical shift value of carbon branches having 4 or more carbon atoms when measuring $^{13}C$-NMR is conducted based on the description of Macromolecules, Volume 32, No. 11, Page 3817, 1999.

It is generally known that the balance between rigidity and durability is improved by that more short chain branches are incorporated in a high molecular weight side in molecular weight distribution. Short chain branches incorporated in longer polyethylene chain are easy to convert into amorphous chain connecting crystal lamella, that is, tie molecule. One improvement of a chromium catalyst is uniformity of composition distribution of short chain branches. A polymer obtained using a chromium catalyst has the tendency that many short chain branches are contained in a polymer having low molecular weight. If many short chain branches are equally incorporated in a high molecular weight side, polymer performance is improved. In fact, composition distribution of short chain branches of a polymer obtained using a metallocene catalyst is uniform, leading to improvement in polymer performance.

In the present invention, the case that Xa is larger than 1.20 or Xb is smaller than 0.80 means that many short chain branches are incorporated in a low molecular weight side, and by setting Xa and Xb to the above specific ranges, the intended property balance is obtained.

The above requirement can be achieved by selecting a polymerization catalyst and polymerization conditions. For example, by conducting polymerization using a dialkoxyaluminum alkoxide compound-supported chromium catalyst as a catalyst as described hereinafter, the polyethylene of the present invention can be produced.

(3) Density

The density of the polyethylene of the present invention falls within a range of generally from 0.940 to 0.960 g/cm$^3$, preferably from 0.943 to 0.957 g/cm$^3$, and more preferably from 0.945 to 0.955 g/cm$^3$.

Where the density is less than 0.940 g/cm$^3$, rigidity of a hollow plastic molding tends to be deficient, and where the density exceeds 0.960 g/cm$^3$, durability of a hollow plastic molding tends to be deficient.

The density can be adjusted by a method such as a kind of $\alpha$-olefin or control of its content. For example, the density can be increased by decreasing the $\alpha$-olefin content in the polyethylene (decreasing the amount of $\alpha$-olefin added during polymerization), or when the same content is maintained, by using $\alpha$-olefin having small number of carbon atoms.

The density is measured by melting pellets by a thermocompression molding machine at a temperature of 160°C, decreasing the temperature in a rate of 25°C/min, molding into a sheet having a thickness of 2 mm, adjusting the sheet in a chamber at a temperature of 23°C for 48 hours, and introducing in a density gradient tube, according to JIS K-7112.

(4) Number of short chain branches having 4 or more carbon atoms per 1,000 carbons in main chain

The number of short chain branches having 4 or more carbon atoms per 1,000 carbons in main chain of the polyethylene of the present invention is 3.0 or less. The number of short chain branches having 4 or more carbon atoms per 1,000 carbons in main chain of the polyethylene is generally 0.5 or more. The number of short chain branches having 4 or more carbon atoms per 1,000 carbons in main chain can be measured by $^{13}C$-NMR, and the assignment of chemical shift value of carbon branches having 4 or more carbon atoms is conducted based on the description of Macromolecules, Volume 32, No. 11, Page 3817, 1999.

Where the number of short chain branches having 4 or more carbon atoms per 1,000 carbons in main chain exceeds 3.0, rigidity of a hollow plastic molding tends to be deficient. Where number of short chain branches having 4 or more carbon atoms per 1,000 carbons in main chain is less than 0.5, durability of a hollow plastic molding tends to be deficient.

The above requirement can be achieved by selecting a polymerization catalyst and polymerization conditions.

(5) High load melt flow rate (HLMFR)

The polyethylene of the present invention has HLMFR fallen within a range of generally from 1 to 10 g/10 min, preferably from 3 to 7 g/10 min, and more preferably from 4 to 6 g/10 min.

Where the HLMFR is less than 1 g/10 min, the extrusion amount is deficient when extrusion molding a parison (in blow molding, pipe-shaped molten polymer extruded from a nozzle of a molding machine; state before expanding by air pressure in a mold), and unstable molding state tends to occur, which is not practical. Where the HLMFR exceeds 10 g/10 min, formation of a parison tends to become unstable due to lack of melt viscosity and melt tension, which is

not practical.

The HLMFR can be adjusted by a method such as control of a polymerization temperature and a hydrogen concentration. For example, the HLMFR can be increased by increasing a polymerization temperature or increasing a hydrogen concentration.

The HLMFR is measured under the conditions of a temperature of 190°C under a load of 21.60 kg according to JIS K-7210.

(6) Molecular weight distribution (Mw/Mn)

The polyethylene of the present invention has a ratio (Mw/Mn) of a weight average molecular weight (Mw) to a number average molecular weight (Mn) falling within a range of from 20 to 40. Where the Mw/Mn is less than 10, durability of a hollow plastic molding tends to be deficient, and where the Mw/Mn exceeds 50, impact strength of a hollow plastic molding tends to be deficient.

The above requirement can be achieved by selecting a polymerization catalyst and polymerization conditions.

(7) FNCT (Rupture time by full notch tensile creep test)

In the polyethylene of the present invention, both a density and FNCT (rupture time by full notch tensile creep test) show large value. The relationship between the density and FNCT is shown in Fig. 2. The polyethylene of the present invention is plotted in an upper right region in Fig. 2 as compared with the commercially available products (for example, high density polyethylene "HB111R", manufactured by Japan Polyethylene Corporation, and high density polyethylene "4261AG", manufactured by Basell), and even though the FNCT is the same, the density is high (rigidity is high), and the balance between rigidity (density) and durability is excellent.

[II] Production method of polyethylene

A dialkylaluminum alkoxide compound-supported chromium catalyst as a polymerization catalyst and a polymerization method are described in detail below.

(1) Dialkylaluminum alkoxide compound-supported chromium catalyst

The dialkylaluminum alkoxide compound-supported chromium catalyst is prepared by supporting a chromium compound on an inorganic oxide support, calcining and activating in a non-reducing atmosphere to convert at least a part of chromium atoms to hexavalent atoms, supporting the dialkylaluminum alkoxide compound in an inert hydrocarbon solvent, and removing the solvent and drying.

In such a case, the reason of removing the solvent and drying, such that the contact time between the catalyst and the solvent is shortened as possible is that chromium atoms are prevented from being over-reduced with the dialkylaluminum alkoxide compound.

The chromium catalyst in which a chromium compound is supported on an inorganic oxide support, and calcined and activated in a non-reducing atmosphere to convert at least a part of chromium atoms to hexavalent atoms is generally known as Phillips catalyst and is the conventional catalyst.

Summary of the catalyst is described in, for example, the following literatures.

(i) M. P. McDaniel, Advances in Catalysis, Volume 33, Page 47, 1985, Academic Press Inc.
(ii) M. P. McDaniel, Handbook of Heterogeneous Catalysts, Page 2400, 1977, VCH
(iii) M. B. Welch, et al., Handbook of Polyolefins: Synthesis and Properties, Page 21, 1993, Marcel Dekker

The inorganic oxide support is preferably oxides of metals of Group 2, 4, 13 or 14 in a periodic table. Specific examples include magnesia, titania, zirconia, alumina, silica, thoria, silica-titania, silica-zirconia, silica-alumina, and mixtures of those. Above all, silica, silica-titania, silica-zirconia and silica-alumina are preferred, and silica is more preferred. In the case of silica-titania, silica-zirconia and silica-alumina, the inorganic oxide support containing titanium, zirconium or aluminum atoms in an amount of from 0.2 to 10% by weight, preferably from 0.5 to 7% by weight, and more preferably from 1 to 5% by weight, as a metal component other than silica is used. Production method of a support suitable for those chromium catalysts, physical properties and characteristics are described in, for example, the following literatures.

(i) C. E. Marsden, Preparation of Catalysts, Volume V, Page 215, 1991, Elsevier Science Publishers
(ii) C. E. Marsden, Plastics, Rubber and Composites Processing and Applications, Volume 21, Page 193, 1994

In the present invention, the support of the chromium catalyst is selected so as to have a specific surface area of generally from 250 to 1,100 $m^2/g$, preferably from 300 to 1,050 $m^2/g$, and more preferably from 400 to 1,000 $m^2/g$. Where the specific surface area is less than 250 $m^2/g$, both durability and impact resistance tend to be decreased, although it is considered to be associated with that molecular weight distribution is narrowed and long chain branches are increased. The support having the specific surface area exceeding 1,100 $m^2/g$ has the tendency that the production becomes difficult.

Pore volume of the support is generally form 0.5 to 3.0 $cm^3/g$, preferably from 1.0 to 2.0 $cm^3/g$, and more preferably from 1.2 to 1.8 $cm^3/g$, similar to the case of the support used in the general chromium catalyst. Where the pore volume is less than 0.5, pores become small by polymerized polymer when polymerizing, a monomer cannot diffuse, and activity tends to be decreased. The support having the pore volume exceeding 3.0 $cm^3/g$ has the tendency that the production becomes difficult.

An average particle size of the support is generally from 10 to 200 $\mu$m, preferably from 20 to 150 $\mu$m, and more preferably from 30 to 100 $\mu$m, similar to the support used in the general chromium catalyst.

A chromium compound is supported on the inorganic oxide support. The chromium compound can be any compound so long as at least a part of chromium atoms converts to hexavalent atoms by calcining and activating in a non-reducing atmosphere after supporting, and examples thereof include chromium oxide, halide, oxyhalide, chromate, bichromate, nitrate, carboxylate and sulfate of chromium, chromium-1,3-diketo compound and chromic acid ester. Specific examples include chromium trioxide, chromium trichloride, chromyl chloride, potassium chromate, ammonium chromate, potassium bichromate, chromium nitrate, chromium sulfate, chromium acetate, chromium tris(2-ethylhexanoate), chromium acetyl acetonate and bis(tert-butyl)chromate. Of those, chromium trioxide, chromium acetate and chromium acetyl acetonate are preferred. Even in the case of using the chromium compound having an organic group, such as chromium acetate or chromium acetyl acetonate, the organic group moiety burns by activation by calcining in a non-reducing atmosphere described hereinafter. Finally, the chromium compound reacts with a hydroxyl group on the surface of the inorganic oxide support, similar to the case of using chromium trioxide, at least a part of chromium atoms converts to hexavalent atoms, and the chromium compound is fixed in the form of a structure of chromic acid ester.

Those methods are described in, for example, the following literatures.

(i) V. J. Ruddick, et al., J. Phys. Chem., Volume 100, Page 11062, 1996
(ii) S. M. Augustine, et al., J. Catal., Volume 161, Page 641, 1996

The chromium compound can be supported on the inorganic oxide support by the conventional method such as impregnation, solvent distillation or sublimation, and an appropriate method can be used depending on the kind of the chromium compound used. The amount of the chromium compound supported is generally from 0.2 to 2.0% by weight, preferably from 0.3 to 1.7% by weight, and more preferably from 0.5 to 1.5% by weight, in terms of chromium atom, based on the support.

After supporting the chromium compound on the support, the support is calcined to conduct activation treatment. The activation by calcining can be conducted in a non-reducing atmosphere that does not substantially contain moisture, for example, in oxygen or the air. In such a case, an inert gas may coexist. Preferably, the activation by calcining is conducted under flowing state using sufficiently dried air by passing through molecular sieves or the like. The activation by calcining is conducted at a temperature of generally from 400 to 900°C, preferably from 420 to 850°C, and more preferably from 450 to 800°C, for a period of generally from 30 minutes to 48 hours, preferably from 1 to 36 hours, and more preferably from 2 to 24 hours. By the activation by calcining, at least a part of chromium atoms of the chromium compound supported on the inorganic oxide support is oxidized into hexavalent atoms, and the chromium compound is chemically fixed on the support. Where the activation by calcining is conducted at a temperature lower than 400°C, polymerization activity tends to be lost. On the other hand, where the activation by calcining is conducted at a temperature exceeding 900°C, sintering occurs, and activity tends to be decreased.

Thus, the chromium catalyst used in the present invention is obtained. In the production of the polyethylene of the present invention, before supporting the chromium compound or before the activation by calcining after supporting the chromium compound, the conventional method of adjusting ethylene polymerization activity, copolymerizability with $\alpha$-olefin, and molecular weight and molecular weight distribution of the polyethylene obtained, by adding metal alkoxides or organometal compounds, represented by titanium alkoxides such as titanium tetraisopropoxide, zirconium alkoxides such as zirconium tetrabutoxide, aluminum alkoxides such as aluminum tributoxide, organoaluminum such as trialkyl aluminum, and organomagnesium such as dialkyl magnesium, or fluorine-containing salts such as ammonium fluorosilicate may be used.

In those metal alkoxides or organometal compounds, the organic group moiety burns by the activation by calcining in a non-reducing atmosphere, those are oxidized into metal oxides such as titania, zirconia, alumina or magnesia, to be contained in the catalyst. In the case of fluorine-containing salts, the inorganic oxide support is fluorinated.

Those methods are described in, for example, the following literatures.

(i) C. E. Marsden, Plastics, Rubber and Composites Processing and Applications, Volume 21, Page 193, 1994
(ii) T. Pullukat, et al., J. Polym. Sci., Polym. Chem. Ed., Volume 18, Page 2857, 1980
(iii) M. P. McDaniel, et al., J. Catal., Volume 82, Page 118, 1983

Specific production method of a dialkylaluminum alkoxide compound-supported chromium catalyst is described below.

In the present invention, a dialkylaluminum alkoxide compound is supported on a chromium catalyst activated by calcining, in an inert hydrocarbon solvent, and the solvent is removed to dry. The catalyst thus obtained is used as a dialkylaluminum alkoxide compound-supported chromium catalyst.

The dialkylaluminum alkoxide is a compound represented by the following general formula (2):

$$R^1R^2Al(OR^3) \qquad (2)$$

wherein $R^1$, $R^2$ and $R^3$ are an alkyl group having from I to 18 carbon atoms, and may be the same or different.

Specific examples of the dialkylaluminum alkoxide include dimethylaluminum methoxide, dimethylaluminum ethoxide, dimethylaluminum n-propoxide, dimethylaluminum isopropoxide, dimethylaluminum n-butoxide, dimethylaluminum isobutoxide, dimethylaluminum amyloxide, dimethylaluminum hexyloxide, dimethylaluminum octyloxide, diethylaluminum methoxide, diethylaluminum ethoxide, diethylaluminum n-propoxide, diethylaluminum isopropoxide, diethylaluminum n-butoxide, diethylaluminum isobutoxide, diethylaluminum amyloxide, diethylaluminum hexyloxide, diethylaluminum octyloxide, di-n-propylaluminum methoxide, di-n-propylaluminum ethoxide, di-n-propylaluminum n-propoxide, di-n-propylaluminum isopropoxide, di-n-propylaluminum n-butoxide, di-n-propylaluminum isobutoxide, di-n-propylaluminum amyloxide, di-n-propylaluminum hexyloxide, di-n-propylaluminum octyloxide, di-n-butylaluminum methoxide, di-n-butylaluminum ethoxide, di-n-butylaluminum n-propoxide, di-n-butylaluminum isopropoxide, di-n-butylaluminum n-butoxide, di-n-butylaluminum isobutoxide, di-n-butylaluminum amyloxide, di-n-butylaluminum hexyloxide, di-n-butylaluminum octyloxide, diisobutylaluminum methoxide, diisobutylaluminum ethoxide, diisobutylaluminum n-propoxide, diisobutylaluminum isopropoxide, diisobutylaluminum n-butoxide, diisobutylaluminum isobutoxide, diisobutylaluminum amyloxide, diisobutylaluminum hexyloxide, diisobutylaluminum octyloxide, dihexylaluminum methoxide, dihexylaluminum ethoxide, dihexylaluminum n-propoxide, dihexylaluminum isopropoxide, dihexylaluminum n-butoxide, dihexylaluminum isobutoxide, dihexylaluminum amyloxide, dihexylaluminum hexyloxide, dihexylaluminum octyloxide, dioctylaluminum methoxide, dioctylaluminum ethoxide, dioctylaluminum n-propoxide, dioctylaluminum isopropoxide, dioctylaluminum n-butoxide, dioctylaluminum isobutoxide, dioctylaluminum amyloxide, diocylaluminum hexyloxide, and dioctylaluminum octyloxide. Of those, diethylaluminum ethoxide, diethylaluminum n-propoxide, diethylaluminum n-butoxide, di-n-butylaluminum ethoxide, di-n-butylaluminum n-propoxide, di-n-butylaluminum n-butoxide, diisobutylaluminum ethoxide, diisobutylaluminum n-propoxide and diisobutylaluminum n-butoxide are preferred. Dialkylaluminum siloxide in which carbon atom adjacent to oxygen atom in an alkoxide moiety are changed to silicon atoms may be used.

The dialkylaluminum alkoxide can be easily synthesized by (i) a method of reacting trialkyl luminum with an alcohol, (ii) a method of reacting dialkylaluminum halide with a metal alkoxide, and the like.

That is, to synthesize the dialkylaluminum alkoxide represented by the general formula (2), a method of reacting trialkylaluminum alkoxide with an alcohol in a molar ratio of 1:1 as shown in the following formula (wherein R may be the same with or different from $R^4$, $R^5$ and $R^6$, and represents an alkyl group having from 1 to 18 carbon atoms):

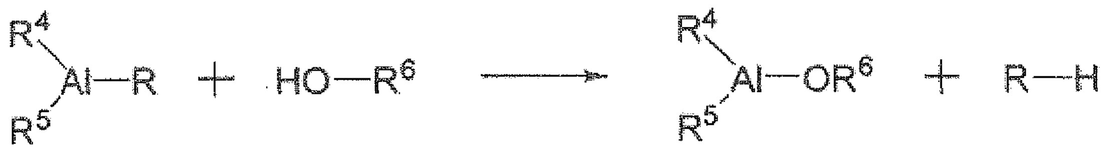

or a method of reacting dialkylaluminum halide with metal alkoxide in a molar ratio of 1:1 as shown in the following formula (wherein X in dialkylaluminum halide $R^4R^5AlX$ represents fluorine, chlorine, bromine or iodine, and chlorine is particularly preferably used. Furthermore, M in metal alkoxide $R^6OM$ represents an alkali metal, and lithium, sodium and potassium are particularly preferred.)
is preferably used.

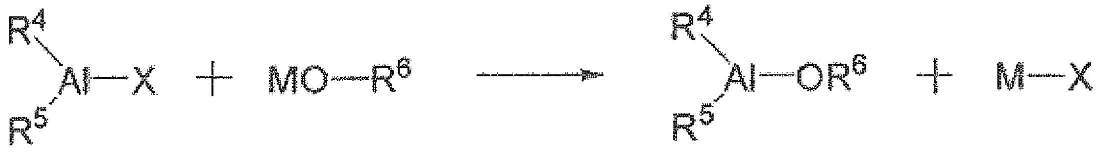

By-product R-H is an inert alkane. In the case that a boiling point is low, the by-product evaporates into the outside of the system during the reaction process. In the case that a boiling point is high, the by-product remains in a solution, but even though remaining in the system, the by-product is inert to the subsequent reactions. By-product M-X is alkali metal halide and precipitates. Therefore, the by-product can be easily removed by filtration or decantation.

Those reactions are preferably conducted in an inert hydrocarbon such as hexane, heptane, octane, decane, cyclohexane, benzene, toluene or xylene. The reaction temperature may be any temperature so long as the reaction proceeds. The reaction is conducted at preferably 0°C or higher, and more preferably 20°C or higher. Heating at the boiling point or higher of the solvent used to conduct the reaction under reflux of a solvent is a preferable method in completing the reaction. The reaction time is optional. The reaction is conducted for preferably 1 hour or more, and more preferably 2 hours or more. After completion of the reaction, the resulting reaction mixture may be directly cooled and then used in the reaction with a chromium catalyst, in the form of a solution, and the solvent may be removed to isolate a reaction product. Use in the form of a solution is easy and is preferred.

Synthesis method and physical and chemical properties of the dialkylaluminum alkoxide are described in detail in T. Mole, et al., Organoaluminum Compounds, 3rd ed., 1972, Elsevier, chapter 8, and the like.

The amount of the dialkylaluminum alkoxide compound supported is, as a molar ratio of the dialkylaluminum alkoxide compound to chromium atom, is generally from 0.1 to 20, preferably from 0.3 to 15, and more preferably from 0.5 to 10. Where the molar ratio is less than 0.1, the amount of the dialkylaluminum alkoxide is too small, and the effect of the polyethylene described in the present application by supporting the dialkylaluminum alkoxide compound cannot be expected. Where the molar ratio exceeds 20.0, ethylene polymerization activity is decreased than the case that the dialkylaluminum alkoxide compound is not supported, and additionally, there is the tendency that molecular weight distribution becomes wide and durability is improved, but impact resistance is decreased. The reason for decrease in activity is not clear, but it is considered that excess dialkylaluminum alkoxide compound bonds to chromium active site to inhibit ethylene polymerization reaction.

The method for supporting the dialkylaluminum alkoxide compound is not particularly limited so long as it is a method of contacting a chromium catalyst after activation by calcining, in a liquid phase of an inert hydrocarbon. For example, a method of mixing the chromium catalyst after activation by calcining with an inert hydrocarbon solvent such as propane, n-butane, isobutene, n-pentane, isopentane, hexane, heptane, octane, decane, cyclohexane, benzene, toluene or xylene to form a slurry state, and adding the dialkylaluminum alkoxide compound to the slurry is preferred. The dialkylaluminum alkoxide compound added may be diluted with the above inert hydrocarbon solvent, and may be added without dilution. The solvent for dilution and the solvent for supporting may be the same or different.

The amount of the inert hydrocarbon solvent used is preferably an amount sufficient to conduct stirring in at least the slurry state when preparing a catalyst. The amount of the solvent used is not particularly limited so long as it is such an amount. For example, the solvent can be used in an amount of from 2 to 20 g per 1 g of the chromium catalyst after activation by calcining.

In the present invention, the order of addition of the dialkylaluminum alkoxide compound and the chromium catalyst to the solvent when treating the chromium catalyst with the dialkylaluminum alkoxide compound in an inert hydrocarbon solvent is optional. Specifically, the operation of supporting reaction of suspending the chromium catalyst in the inert hydrocarbon solvent, adding the dialkylaluminum alkoxide compound to the resulting suspension, and stirring the resulting mixture is preferred.

The supporting reaction temperature is generally from 0 to 150°C, preferably from 10 to 100°C, and more preferably from 20 to 80°C. The supporting reaction time is generally from 5 minutes to 8 hours, preferably from 30 minutes to 6 hours, and more preferably from 1 to 4 hours. The dialkylaluminum alkoxide compound reacts with chromium atoms in which at least a part thereof has converted into hexavalent atoms after activation by calcining, and the hexavalent atoms are reduced to chromium atoms having low atomic valency. This phenomenon can be confirmed by that the chromium catalyst after activation by calcining has orange color inherent in hexavalent chromium atom, whereas the chromium catalyst having been subjected to supporting operation by the dialkylaluminum alkoxide compound has green color or bluish green color. That is, it is presumed from the change in color of the chromium catalyst that at least a part of hexavalent chromium atoms is reduced to trivalent or divalent chromium atoms.

In recent years, Terano, et al., measure atomic valence of Cr atom with X-ray photoelectron spectroscopy after supporting triethylaluminum on an activated chromium catalyst in a heptane solvent, followed by drying, and observe the presence of not only hexavalent chromium atom, but divalent, trivalent and heptavalent chromium atoms (M. Terano,

et al., J. Mol. Catal. A: Chemical, Volume 238, Page 142, 2005). However, it is said that the proportion of actual polymerization active sites in all Cr atoms is from about 10 to 30% (M. P. McDaniel, et al., J. Phys. Chem., Volume 95, Page 3289, 1991), and the conclusion is not reached at this time as to what is the atomic valence of chromium atom at a polymerization active site. Monoi, et al. advocate that a catalyst comprising silica having supported thereon a trialkylchromium complex shows the same polymerization behaviors as Phillips catalyst (T. Monoi, et al., Polym. J., Volume 35, Page 608, 2003), and Espelid et al., advocate that trivalent chromium atom is atomic valence of active site by theoretically calculating activation energy of ethylene insertion reaction at a model active site of Phillips catalyst (O. Espelid, et al., J. Catal., Volume 195, Page 125, 2000).

It is necessary to quickly remove the solvent after stopping the stirring and completing the supporting operation. Removal of the solvent is conducted by drying under reduced pressure, and in such a case, filtration can be employed together. The drying under reduced pressure is conducted so as to obtain the dialkylaluminum alkoxide compound-supported chromium catalyst as a free-flowing powder. When the catalyst is stored for a long period of time without separating the catalyst from the solvent, the catalyst undergoes deterioration with the passage of time, and ethylene polymerization activity is decreased. Additionally, molecular weight distribution becomes wide. As a result, although durability is improved, impact resistance is decreased, and the balance between durability and impact resistance is deteriorated, which is not preferred. Therefore, it is preferred to shorten as possible the contact time with a solvent, including the contact time with a solvent in the supporting reaction, and quickly separate and remove the solvent. Technical literatures describing the effect that polyethylene in which all of polymerization activity, durability and impact resistance have been improved by quick separation and removal of a solvent are not found out, and quick separation of a solvent after the supporting reaction is one of the most important characteristics of the present invention.

The detailed reason that the effect is obtained is not clear, but it is considered that the reaction between the chromium active site and the dialkylaluminum alkoxide compound continues to proceed in the presence of a solvent, and as a result, chromium atoms that have been activated by calcining in a non-reducing atmosphere to convert a part thereof into hexavalent atoms are over-reduced to divalent, monovalent or zerovalent chromium atoms, thereby changing into a catalyst structure that inhibits an ethylene polymerization reaction. However, it is difficult to specifically show an over-reduction state, for example, to show specific number of atomic valence of chromium in the over-reduction state. Alternatively, it is considered that organoaluminum species that will be formed by the reaction between the dialkylaluminum alkoxide compound and the hexavalent chromium atoms (accurately, chromium oxide chemically bonded to silanol groups on silica surface) coordinate in polymerization active site, thereby inhibiting an ethylene polymerization reaction. In short, the degree of over-reduction can be judged by the decrease in polymerization activity and the decrease in properties of a polymer obtained, mainly the decrease in impact strength. The impact strength used here is specifically Charpy impact strength. In other words, when the contact time with a solvent is too long, the decrease in polymerization activity and the decrease in properties, mainly impact strength, of a polymer obtained are appeared. Therefore, the contact time with a solvent, including solvent contact time in the supporting reaction shortens as possible such that polymerization activity and impact strength of a polymer obtained are not substantially decreased, and even if decreased, the degree of decrease minimizes. In other words, it is necessary that the supporting reaction time that is the contact time with a solvent shortens as possible, and after supporting, the solvent is quickly removed so as to avoid the progress of the over-reduction reaction. The time required to remove the solvent, followed by drying, after the completion of supporting reaction is generally 3 times or less, preferably 2 times or less, and particularly preferably 1 time or less, the supporting reaction time. The overall time of from the initiation of the supporting to the completion of solvent removal and drying is generally from 5 minutes to 24 hours, preferably from 30 minutes to 18 hours, and more preferably from 1 to 12 hours. Where the overall time exceeds 24 hours, the polymerization activity is decreased.

The dialkylaluminum alkoxide compound-supported chromium catalyst after completion of the drying is preferably in a state free from free flowing viscosity and moistness.

In the case of using the organoaluminum compound together with the chromium catalyst, a method of directly or separately feeding the chromium catalyst and the organoaluminum compound to a reactor in the presence or absence of a dilutent solvent, and a method of once premixing or contacting the chromium catalyst with the organoaluminum compound in a solvent, and feeding the mixed slurry to a reactor are considered. However, any of those methods conducts continuous production while separately feeding the chromium catalyst and the organoaluminum compound to the reactor. Therefore, if the amounts of the chromium catalyst and organoaluminum compound continuously fed, and its ratio are not accurately adjusted, polymerization activity and molecular weight of the polyethylene obtained vary, and it becomes difficult to continuously produce moldings within the same specification.

According to the method of the present invention, the dialkylaluminum alkoxide compound is previously supported on the chromium catalyst, and the catalyst in which a molar ratio of the dialkylaluminum alkoxide compound to chromium atom is always constant is fed to a reactor, and as a result, moldings within the same specification can be continuously produced in a stable manner. Therefore, the method of the present invention is an excellent method suitable for continuous production of polyethylene having constant quality.

Thus, the dialkylaluminum alkoxide-supported chromium catalyst used in the present invention is obtained. In

producing the polyethylene of the present invention, a method of improving ethylene polymerization activity by supporting organomagnesium such as butyl ethyl magnesium or dibutyl magnesium, or MAOs obtained from a reaction between trialkyl magnesium and water, represented by MAO or MMAO, before supporting the dialkylaluminum alkoxide compound may be used together.

(2) Polymerization method

In conducting the production of polyethylene using the dialkylaluminum alkoxide compound-supported chromium catalyst described above, any method of a liquid phase polymerization method such as slurry polymerization or solution polymerization, or a gas phase polymerization can be employed. Slurry polymerization method is particularly preferred, and any of a slurry polymerization using a pipe loop type reactor, and a slurry polymerization method using an autoclave type reactor can be used. Above all, the slurry polymerization method using a pipe loop type reactor is preferred (the details of a pipe loop type reactor and a slurry polymerization using the same are described in Kazuo Matsuura and Naotaka Mikami, Technical Handbook for Polyethylene, Page 148, 2001, Kogyo Chosakai Publishing Co., Ltd.).

The liquid phase polymerization method is generally conducted in a hydrocarbon solvent. Examples of the hydrocarbon solvent include propane, n-butane, isobutene, n-pentane, isopentane, hexane, heptane, octane, decane, cyclohexane, benzene, toluene and xylene, and those hydrocarbon solvents can be used alone or as mixtures thereof. The gas phase polymerization method can employ the generally known polymerization methods such as fluidized bed or stirred bed, in the co-presence of inert gas, and can employ a so-called condensing mode in which depending on the case, a medium for removing the heat of polymerization coexists.

The polymerization temperature in the liquid phase polymerization method is generally from 0 to 300°C, practically from 20 to 200°C, preferably from 50 to 180°C, and more preferably from 70 to 150°C. Catalyst concentration and ethylene concentration in the reactor can be optional concentrations sufficient to make polymerization proceed. For example, the catalyst concentration can be a range of from about 0.0001 to about 5% by weight based on the weight of contents in the reactor in the case of the liquid phase polymerization. Similarly, the ethylene concentration can be a range of from about 1% to 10% by weight based on the weight of contents in the reactor in the case of the liquid phase polymerization.

In conducting ethylene polymerization using the dialkylaluminum alkoxide -supported chromium catalyst, $\alpha$-olefin is preferably copolymerized as a comonomer. Copolymerization is generally conducted by introducing one or two kinds or more of propylene, 1-butene, 1-hexene, 4-methyl-1-pentene, 1-octene and the like as the $\alpha$-olefin in a reactor. 1-Butene and 1-hexene are preferably used as the comonomer, and 1-hexene is more preferably used as the comonomer. The $\alpha$-olefin content in the polyethylene obtained is generally 15 mol% or less, and preferably 10 mol% or less.

As the polymerization method, not only single stage polymerization that produces polyethylene using one reactor, multistage polymerization can be conducted by connecting at least two reactors in order to improve production amount or in order to widen molecular weight distribution. In the case of the multistage polymerization, two-stage polymerization in which two reactors are connected and a reaction mixture obtained by polymerizing in a first-stage reactor is continuously fed to the subsequent second-stage reactor is preferred. Transfer of from the first stage reactor to the second stage reactor is conducted by continuous discharge or intermittent discharge of a polymerization reaction mixture through a connecting pipe. Transfer of the polymerization reaction mixture from the second stage reactor is also conducted by continuous discharge or intermittent discharge.

The polyethylene may be produced by the first stage reactor and the second stage reactor under the same polymerization conditions, and the polyethylene having the same HLMFR and density may be produced by the first stage reactor and the second stage reactor. In the case of widening molecular weight distribution, polyethylenes produced in both reactors preferably have different molecular weight. Any production method in which a high molecular weight component is produced in the first stage reactor and a low molecular weight component is produced in the second stage reactor, or a low molecular weight component is produced in the first stage reactor and a high molecular weight component is produced in the second stage reactor, may be used. However, the production method in which a high molecular weight component is produced in the first stage reactor and a low molecular weight component is produced in the second stage reactor is more preferred from the standpoint of productivity, for the reason that in transferring from the first stage to the second stage, an intermediate hydrogen flash tank is not required.

In the first stage, polymerization reaction of ethylene alone or according to the need, copolymerization ethylene with $\alpha$-olefin, is conducted while adjusting the molecular weight by a weight ratio (Hc/ETc) of hydrogen concentration to ethylene concentration, polymerization temperature, or both, or while adjusting the density by a weight ratio of $\alpha$-olefin to ethylene olefin,

In the second stage, hydrogen in the reaction mixture flown in from the first stage and $\alpha$-olefin flown in therefrom are used. However, according to the need, fresh hydrogen and $\alpha$-olefin can be added. Therefore, in the second stage, the polymerization reaction can be conducted while adjusting the molecular weight by a weight ratio (Hc/ETc) of hydrogen

concentration to ethylene concentration, polymerization temperature, or both, or while adjusting the density by a weight ratio of α-olefin to ethylene olefin. Regarding the catalyst and the organometal compound such as an organoaluminum compound, not only the polymerization reaction is continuously conducted in the second stage by the catalyst flown in from the first stage, but fresh catalyst, organometal compound such as an organoaluminum compound, or both may be supplied in the second stage.

Ratio between the high molecular weight component and the low molecular weight component in the case of producing by the two stage polymerization is that generally the high molecular weight component is from 10 to 90 parts by weight and the low molecular weight component is from 90 to 10 parts by weight, preferably the high molecular weight component is from 20 to 80 parts by weight and the low molecular weight component is from 80 to 20 parts by weight, and more preferably the high molecular weight component is from 30 to 70 parts by weight and the low molecular weight component is from 70 to 30 parts by weight. HLMFR of the high molecular weight component is generally from 0.01 to 100 g/10 min, and preferably from 0.01 to 50 g/10 min, and HLMFR of the low molecular weight component is generally from 10 to 1,000 g/10 min, and preferably from 10 to 500 g/10 min.

The polyethylene obtained is then preferably kneaded. The kneading is conducted using a single-screw or twin-screw extruder, or a continuous kneading machine.

In obtaining the polyethylene of the present invention using the dialkylaluminum alkoxide compound-supported chromium catalyst, the relationship between the characteristics in the case of using the respective aluminum compounds and polymerization conditions for improving durability represented by creep resistance is described in detail below.

To improve creep resistance of polyethylene, it is important to widen molecular weight distribution. That is, to improve the creep resistance, it is preferred to increase a molecular weight as possible. However, where the molecular weight is too high, molding of a resin cannot be performed. Therefore, to impart flowability, polyethylene of low molecular weight region is necessary, and this requires to widen molecular weight distribution (J. Scheirs and W. Kaminsky, Metallocene-based Polyolefins, Volume 2, Page 365, 2000, John Wiley & Sons). In the case of obtaining polyethylene using the general chromium catalyst, to widen molecular weight distribution, decreasing at least one of an activation temperature and a polymerization temperature is the general means (for example, Kazuo Matsuura and Naotaka Mikami, Technical Handbook for Polyethylene, Page 134, 2001, Kogyo Chosakai Publishing Co., Ltd.). However, when at least one of an activation temperature and a polymerization temperature is decreased, it is general that activity is decreased, and at the same time, HLMFR is decreased

(Technical Handbook for Polyethylene, Page 134, described before). Therefore, in many cases, economically manufacturable polymerization conditions for obtaining polyethylene having given HLMFR cannot be set. Furthermore, it is known that by widening molecular weight distribution, in the case that the low molecular weight component is increased, impact resistance is decreased. That is, there is a limit to improve both impact resistance and durability by merely widening molecular weight distribution.

It has been found in the present invention that in the case of the dialkylaluminum alkoxide compound-supported chromium catalyst, as compared with the case that the dialkylaluminum alkoxide compound is not supported, in the comparison in the same HLMFR and the same density, even though the ratio (Mw/Mn) of the weight average molecular weight (Mw) to the number average molecular weight (mn) is the same, creep resistance is greatly improved. The reason for this is considered that distribution of short chain branches derived from a comonomer is improved. In other words, it is considered that generally short chain branches are not introduced in a high molecular weight region by a chromium catalyst (the above-described Technical Handbook for Polyethylene, Pages 103-104), but the short chain branches are introduced up to higher molecular weight region by supporting dialkylaluminum alkoxide, and as a result, creep resistance has been improved (it is well known that when short chain branches are introduced up to high molecular weight region, creep resistance is improved; the above-described Technical Handbook for Polyethylene, Pages 156-157).

[III] Hollow plastic molding

Hollow plastic product obtained by molding the polyethylene of the present invention is described below.

The hollow plastic molding of the present invention has a structure having at least one layer of polyethylene, and preferably a multilayered structure. However, the molding may have a single layer structure composed of polyethylene. In the case that the hollow plastic molding has a multilayered structure, the molding preferably has a permeation-reducing blocking layer, and a barrier layer is generally used in the permeation-reducing blocking layer.

When the layer structure of the hollow plastic molding of the present invention is two layers or more, the innermost layer and the outermost layer preferably comprise the polyethylene resin of the present invention.

The hollow plastic molding of the present invention preferably has a multilayered structure containing a permeation-reducing blocking layer in which at least one layer of a barrier layer is present to reduce permeation of volatile substances, and the barrier layer is constituted of a polar blocking polymer. For example, when the wall of a plastic fuel tank is formed to have a multilayered structure, there is the advantage that the barrier layer (the layer itself does not have sufficient moldability and mechanical strength) can be fixed between two layers comprising the polyethylene. As

a result, during coextrusion blow molding, the moldability of a material having two layers or more of the polyethylene resin is improved by mainly receiving improved moldability of the polyethylene. Furthermore, the improved performance of the polyethylene gives very important influence to mechanical strength of a material, and this makes it possible to remarkably increase strength of the hollow plastic molding of the present invention.

Furthermore, in the hollow plastic molding of the present invention, the surface of the polyethylene layer may be covered with a base layer by the treatment such as fluorination, surface covering or plasma polymerization.

Particularly preferred embodiment of the hollow plastic molding by the present invention is a molding having a 4 kinds and 6 layers structure containing the following layers in the order of from the inside to the outside.

That is, the structure comprises the polyethylene resin layer, an adhesive layer, a barrier layer, an adhesive layer, a recycled material layer and the polyethylene resin layer.

Constitution of each layer and layer constitution ratio in the above embodiment are described in detail below.

(I) Layer constitution of hollow plastic molding

1. Outermost layer

A resin (A) constituting the outermost layer of the hollow plastic molding of the present invention is the polyethylene satisfying the above-described requirements.

2. Innermost layer

A resin (B) constituting the innermost layer of the hollow plastic molding of the present invention is the polyethylene satisfying the above-described requirements, and may be the same as the resin (A) and may be different from the resin (A).

3. Barrier layer

A resin (C) forming the barrier layer of the hollow plastic molding of the present invention is selected from an ethylene vinyl alcohol resin, a polyamide resin, a polyethylene terephthalate resin and a polybutylene terephthalate resin. The resin (C) particularly preferably comprises an ethylene vinyl alcohol resin. The ethylene vinyl alcohol resin is more preferably that a degree of saponification is 93% or more, and desirably 96% or more, and an ethylene content is from 25 to 50 mol%.

4. Adhesive layer

A resin (D) forming the adhesive layer of the hollow plastic molding of the present invention is selected from a high density polyethylene graft-modified with an unsaturated carboxylic acid or its derivative, a low density polyethylene, and a linear low density polyethylene. The resin (D) particularly preferably comprises a high density polyethylene graft-modified with an unsaturated carboxylic acid or its derivative.

The content of the unsaturated carboxylic acid or its derivative is generally from 0.01 to 5% by weight, preferably from 0.01 to 3% by weight, and more preferably from 0.01 to 1% by weight. Where the graft-modified amount (content of an unsaturated carboxylic acid or its derivative) is less than 0.01% by weight, sufficient adhesive performance is not exerted, and where the amount exceeds 5% by weight, an unsaturated carboxylic acid that does not contribute to adhesiveness adversely affects adhesiveness.

5. Recycled material layer

A resin forming the recycled material layer of the hollow plastic molding of the present invention is a composition containing the polyethylene (A) forming the outermost layer, the polyethylene (B) forming the innermost layer, the resin (C) forming the barrier layer, and the resin (D) forming the adhesive layer. The amount of each component added is desirably from 10 to 30% by weight of the component (A), from 30 to 50% by weight the component (B), from 1 to 15% by weight of the component (C) and from 1 to 15% by weight of the component (D).

Each component of (A) to (D) can use fresh material. Furthermore, unnecessary portions such as scraps, burr and the like of a multilayered laminate containing each layer comprising each of the components (A) to (D) are recovered and reutilized, and such recycled products can be used as a raw material of each component. For example, a regrind resin obtained by crushing a hollow plastic molding (fuel tank product for automobiles, and the like) once formed, used and utilized is used. In the case of using the recycled product, the whole amount of all of the components (A) to (D) can be supplied from the recycled product, and can be used by mixing with fresh materials.

In the case of using molded burr generated in preparing a multilayered laminate or unused parison as a recycled material, solubility of various components may be decreased. Therefore, a compatibilizer or the resin constituting the adhesive layer may further be mixed.

6. Layer constitution ratio of hollow plastic molding

Thickness constitution of each layer of the hollow plastic molding of the present invention is that in the thickness ratio, the outermost layer is from 10 to 30%, the innermost layer is from 20 to 50%, the barrier layer is from 1 to 15%, the adhesive layer is from 1 to 15% and the recycled material layer is from 30 to 60% (provided that the total of all of layer thickness constitution ratios is 100%).

The layer constitution ratio of the outermost layer is generally from 10 to 30%, preferably from 10 to 25%, and more preferably from 10 to 20%. Where the layer constitution ratio of the outermost layer is less than 10%, impact performance is deficient, and where it exceeds 30%, molding stability of the hollow plastic molding is impaired.

The layer constitution ratio of the innermost layer is generally from 20 to 50%, preferably from 35 to 50%, and more preferably from 40 to 50%. Where the layer constitution ratio of the innermost layer is less than 20%, deficiency in rigidity of the hollow plastic molding becomes apparent, and where it exceeds 50%, molding stability of the hollow plastic molding is impaired. The layer constitution ratio of the barrier layer is generally from 1 to 15%, preferably from 1 to 10%, and more preferably 1 to 5%. Where the layer constitution ratio of the barrier layer is less than 1%, barrier performance is unsatisfactory, and where it exceeds 15%, impact performance is deficient.

The layer constitution ratio of the adhesive layer is generally from 1 to 15%, preferably from 1 to 10%, and more preferably 1 to 5%. Where the layer constitution ratio of the adhesive layer is less than 1%, adhesive performance is unsatisfactory, and where it exceeds 15%, deficiency in rigidity of the hollow plastic molding becomes apparent.

The layer constitution ratio of the recycled material layer is generally from 30 to 60%, preferably from 35 to 50%, and more preferably from 35 to 45%. Where the layer constitution ratio of the recycled material layer is less that 30%, molding stability of the hollow plastic material is impaired, and where it exceeds 60%, impact performance is deficient.

The hollow plastic molding of the present invention is preferably a 4 kinds and 6 layers hollow plastic molding in which the outermost layer, the recycled material layer, the adhesive layer, the barrier layer, the adhesive layer and the innermost layer are laminated in the order from the outside. A high level of barrier property is exerted by sandwiching the barrier layer with the adhesive layers. The effects of cost down by reduction of raw material costs and retention of rigidity of the hollow plastic molding are exerted by the presence of the recycled material layer between the outermost layer and the adhesive layer.

(2) Production of hollow plastic molding, and product or uses

The production method of the hollow plastic molding of the present invention is not particularly limited, and the hollow plastic molding can be produced by an extrusion blow molding method using the conventional multilayer hollow molding machine. For example, after melting the constituent resin of each layer with a plurality of extruders, molten parison is extruded by dies of multilayer, the parison is sandwiched between molds, and air is blown in the inside of the parison, thereby a multilayered hollow plastic molding is produced.

The conventional additives such as an antistatic agent, an antioxidant, a neutralizing agent, a lubricant, an anti-blocking agent, an anti-fogging agent, an organic or inorganic pigment, a filler, an inorganic filler, an ultraviolet inhibitor, a dispersing agent, a weather-resistant agent, a crosslinking agent, a foaming agent and a flame retardant can be added to the hollow plastic molding of the present invention in an amount that does not impair the object, according to the need.

As the product, the hollow plastic molding of the present invention is specifically provided as products such as tanks such as a fuel tank, kerosene cans, drums, containers for chemicals, containers for agricultural chemicals, containers for solvents and various plastic bottles, particularly a fuel tank for automobiles. As the uses of the hollow plastic molding of the present invention, tanks such as fuel tanks, kerosene cans, drums, containers for chemicals, containers for agricultural chemicals, containers for solvents and various plastic bottles are exemplified. In particular, the hollow plastic molding is most preferably used as a fuel tank for automobiles.

Example

The present invention is described in further detail below by reference of examples and comparative examples, and excellence of the present invention and superiority in the constitution of the present invention are demonstrated. However, the present invention is not construed as being limited to those examples.

[1] Various measurement methods

Measurement methods used in examples and comparative examples are as follows.

1. Quantitative determination of hydrogen concentration and ethylene concentration in liquid phase in autoclave

Hydrogen concentration and ethylene concentration at the polymerization temperature and under the hydrogen partial pressure and ethylene partial pressure of the conditions of each example and comparative example were previously analyzed and quantitated by a gas chromatography according to JIS K-2301 (2004) in the state that a catalyst was not introduced. Small amount of a solution in the autoclave was extracted and vaporized, and hydrogen concentration and ethylene concentration were quantitated by a thermal conductivity detector under the analysis conditions of column combination B on page 10, Table 2 of the JIS using Gas Chromatograph GC-14A, manufactured by Shimadzu Corporation.

2. Evaluation of physical properties of polyethylene obtained by autoclave polymerization

(2-a) Polymer pretreatment for measurement of physical properties

B225, manufactured by Ciba Geigy was added in an amount of 0.2% by weight as additives, followed by kneading by a single screw extruder and then pelletizing.

(2-b) High load melt flow rate (HLMFR)

According to JIS K-7210 (2004), Appendix A, Table 1-Condition G, measurement value at a test temperature of 190°C under a nominal load of 21.60 kg was shown as HLMFR.

(2-c) Density

Measured according to JIS K-7112 (2004)

(2-d) Molecular weight distribution (Mw/Mn)

Polyethylene formed was subjected to gel permeation chromatograph (GPC) under the following conditions to obtain a number average molecular weight (Mn) and a weight average molecular weight (Mw), and molecular weight distribution (Mw/Mn) was calculated.

[Gel permeation chromatograph measurement conditions]

Apparatus: Waters 150C model
Column: Shodex-HT806M
Solvent: 1,2,4-Trichlorobenzene
Temperature: 135°C
Universal evaluation using monodisperse polystyrene fraction.

Regarding molecular weight distribution (molecular weight distribution becomes wide with increasing Mw/Mn) shown by the ratio (Mw/Mn) of Mw to Mn, data of n-alkane and fractionated straight-chain polyethylene of Mw/Mn≤1.2 were applied to the formula of a molecular weight and detector sensitivity, described in Size Exclusion Chromatograph (high speed liquid chromatography of polymer) (Sadao Mori, page 96, Kyoritsu Shuppan Co., Ltd.) to obtain sensitivity of molecular weight M shown by the following formula, and the actual measurement value of a sample was corrected:

$$\text{Sensitivity of molecular weight M} = a+b/M$$

(a and b are constant number; a=1.032, b=189.2)

(2-e) FNCT (Rupture time by full notch tensile creep test)

A sheet having a thickness of 5.9 mm was compression-molded according to JIS K-6992-2 (2004). Thereafter, a test piece having a shape and a size of Section "Yobi 50" shown in JIS K-6774 (2004), Appendix 5 (regulation), Fig. 1 was prepared, and was subjected to full notch tensile creep test in pure water at 80°C. Tensile load was 88N, 98N and 108N, and test score was 2 points at each load. Rupture time at nominal stress of 6 MPa was defined as an index of FNCT by least-squares method from plots of points of rupture time and nominal stress in double-logarithmic scale obtained.

(2-f) Charpy impact strength

A test piece of Type 1 was prepared according to JIS K-7111 (2004). Charpy impact strength was measured at -40°C in dry ice/alcohol as that striking direction was edgewise and notch type was Type A (0.25 mm).

(2-g) Molecular weight fractionation method and short chain branch distribution measurement

Using celite (60 g) as a support, a polymer sample (1.5 g) and BHT (10 mg) were dissolved in xylene (400 ml) at 135°C, and butyl cellosolve (200 ml) was added. The temperature of the resulting slurry was returned to ordinary temperature, and the slurry was packed in a column (inner diameter: 36.5 mm, length: 250 mm), and the liquid in the column was then completely substituted with butyl cellosolve. Mixed solvents of xylene/butyl cellosolve=0/100, 20/80, 30/70, 40/60, 45/55, 50/50 and 100/0 were used, respectively, and were flown in sequence through the column under the fractionation conditions shown below while controlling the temperature, thereby fractionating in the order of from a liquid having low molecular weight. Acetone was added to liquids fractionated respectively to precipitate and recover polymer samples, followed by drying.

The number of short chains of butyl group or more was measured by measuring $^{13}C$-NMR of the fractionated samples thus obtained. Molecular weight (Mw) was measured by measuring the fractionated samples by GPC. A graph in which molecular weight (Mw) obtained by GPC is indicated in a horizontal axis and the relative value of short chain branches of butyl group or more is indicated in a vertical axis is shown in Fig. 1.

<Fractionation condition>

| Fractionation Number | Temperature | Composition | Flow rate | Time |
|---|---|---|---|---|
| F-1 | Room temperature | 0:100 | 20 | 50 |
| F-2 | 126 | 0:100 | 20 | 75 |
| F-3 | 126 | 20:80 | 16 | 100 |
| F-4 | 126 | 30:70 | 16 | 100 |
| F-5 | 126 | 40:60 | 16 | 100 |
| F-6 | 126 | 45:55 | 16 | 100 |
| F-7 | 126 | 50:50 | 16 | 100 |
| F-8 | 126 | 100:0 | 10 | 150 |

In the above, the unit of temperature is (°C), the composition is represented by the ratio of (xylene/butyl cellosolve), the unit of flow rate is (mL/min) and the time is (min).

3. Evaluation of physical properties of polyethylene obtained by pipe loop type reactor and evaluation of hollow plastic molding

(3-a) Polymer pretreatment for measurement of physical properties

0.05% by weight of ADEKASTUB AO-60 and 0.15% by weight of ADEKASTUB 2112, manufactured by ADEKA, as additives were added, respectively, followed by kneading and palletizing with a single screw extruder.

(3-b) Moldability

In hollow molding a fuel tank for automobiles, drawdown resistance and thickness homogeneity of parison were measured, and very good case was indicated as "Excellent", good case was indicated as "Good", the case that poor molding occurred was indicated as "Poor", and the case that although not poor molding, thickness distribution is slight large was indicated as "Fair".

(3-c) Drop impact property

A fuel tank for automobiles having an antifreezing solution fully poured therein was cooled to -40°C, and vertically dropped from a concrete surface. The presence or absence of liquid spill was judged.

Excellent: Liquid spill was not observed when dropped from a height of 9 m.
Good : Liquid spill was not observed when dropped from a height of 6 m, but liquid spill was observed when dropped from a height of 9 m.
Fair : Liquid spill was not observed when dropped from a height of 3 m, but liquid spill was observed when dropped from a height of 6 m.
Poor : Tank was broken and liquid spill was observed when dropped from a height of 3 m.

(3-d) Gasoline barrier property

Synergy regular gasoline was put in a fuel tank, and state conditioning was carried out at 40°C for one week. The gasoline was replaced and the weight was measured. Wight of the amount that decreases with the passage of time was measured, and determined by the following criteria.

Excellent: Less than 0.01 g/day
Poor : 0.01 g/day or more

[2] Production of ethylene in autoclave and evaluation

[Example 1]

(1) Preparation of chromium catalyst

15 g of catalyst-1 (catalyst comprising silica having supported thereon chromium acetate) having an amount of chromium atoms supported of 1.1% by weight, a specific surface area of 500 $m^2/g$ and a pore volume of 1.5 $cm^3/g$ was prepared, and placed in a porous perforated plate-attached quartz glass tube having a diameter of 5 cm. The tube was set in a cylindrical calcining electric furnace. The catalyst was fluidized by the air through a molecular sieve, and activation by calcining was conducted in a linear velocity of 6 cm/sec at 500°C for 18 hours. An orange chromium catalyst showing that hexavalent chromium atoms are contained was obtained.

(2) Diethylaluminum ethoxide compound-supported chromium catalyst

2 g of the chromium catalyst obtained in (1) above was placed in a 100 ml flask previously substituted with nitrogen, and 30 ml of distillation-refined hexane was added to the flask to prepare a slurry. 5.9 ml (Al/Cr molar ratio=1.4) of 0.1 mol/L-hexane solution of diethylaluminum ethoxide manufactured by Tosoh Finechem Corporation was added, followed by stirring at 40°C for 2 hours. After completion of the stirring, the solvent was immediately removed under reduced pressure over 30 minutes to obtain a free flowing diethylaluminum ethoxide compound-supported chromium catalyst free of viscosity and moisture. The catalyst has green color, and this indicates that hexavalent chromium is reduced.

(3) Polymerization

100 mg of the diethylaluminum ethoxide compound-supported chromium catalyst obtained in (2) above and 0.8 L of isobutane were charged in a 2.0 L autoclave sufficiently substituted with nitrogen, and the inner temperature was increased to 96°C. After introducing hydrogen in 0.1 MPa, 8.5 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst. The polymerization was completed by discharging

the gas in the autoclave into the outside of the system. Summary of the polymerization conditions is shown in Table 1.

Polymerization activity per 1g of the catalyst and per 1 hour of the polymerization time was 1,800 g-polymer/g-catalyst/h. As physical properties, measurement results of HLFMR, density, molecular weight (Mw and Mn), molecular weight distribution (Mw/Mn), FNCT rupture time, Charpy impact strength, and the like are shown in Table 2.

[Example 2]

(1) Preparation of chromium catalyst

A diethylaluminum ethoxide compound-supported chromium catalyst was prepared in the same manners as in Example 1 (1) and (2), except that the 0.1 mol/L diethylaluminum ethoxide-hexane solution was added in an amount of 5.0 ml (Al/Cr molar ratio=1.2) in place of 5.9 ml (Al/Cr molar ratio=1.4).

(2) Polymerization

100 mg of the diethylaluminum ethoxide compound-supported chromium catalyst obtained in (1) above and 0.8 L of isobutane were charged in a 2.0 L autoclave sufficiently substituted with nitrogen, and the inner temperature was increased to 98°C. After introducing hydrogen in 0.1 MPa, 6.0 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst. The polymerization was completed by discharging the gas in the autoclave into the outside of the system. Summary of the polymerization conditions is shown in Table 1. Measurement results of physical properties are shown in Table 2.

[Comparative Example 1]

100 mg of the chromium catalyst obtained in Example 1 (1) except for changing the activation temperature to 600°C and 0.8 L of isobutane were charged in a 2.0 L autoclave sufficiently substituted with nitrogen, and the inner temperature was increased to 99°C. Without introducing hydrogen, 5.0 g of 1-hexene was introduced by pressuring with ethylene, polymerization was conducted such that catalyst productivity becomes 3,000 g-polymer/g-catalyst. The polymerization was completed by discharging the gas in the autoclave into the outside of the system. The summary of the polymerization conditions is shown in Table 1. The polymerization activity was 2,000 g-polymer/g-catalyst/h. Measurement results of physical properties are shown in Table 2.

[Comparative Example 2]

Physical properties of high density polyethylene "HB111R", manufactured by Japan Polyethylene Corporation, were measured, and the results obtained are shown in Table 2.

[Comparative Example 3]

Physical properties of high density polyethylene "4261AG", manufactured by Basell, were measured, and the results obtained are shown in Table 2.

It is seen from Table 2 and Fig. 1 showing the results of Examples 1 and 2 and Comparative Examples 1 to 3 that the polymers of the examples have many short chain branches and the short chain branches are introduced up to high molecular weight region, as compared with the polymers of the comparative examples. It is considered that copolymerizability of a low molecular weight component is decreased by supporting dialkylaluminum ethoxide, and as a result, the short chain branches are relatively introduced in the high molecular weight region. As a result, it is considered that the polymers of the examples have improved impact resistance as compared with the polymers of the comparative examples.

[Example 3]

(l) Preparation of chromium catalyst

15 g of catalyst-1 was prepared, and placed in a porous perforated plate-attached quartz glass tube having a diameter of 5 cm. The tube was set in a cylindrical calcining electric furnace. The catalyst was fluidized by the air through a molecular sieve, and activation by calcining was conducted in a linear velocity of 6 cm/sec at 700°C for 18 hours. An orange chromium catalyst showing that hexavalent chromium atoms are contained was obtained.

(2) Diethylaluminum ethoxide compound-supported chromium catalyst

2 g of the chromium catalyst obtained in (l) above was placed in a 100 ml flask previously substituted with nitrogen, and 30 ml of distillation-refined hexane was added to the flask to prepare a slurry. 5.9 ml (Al/Cr molar ratio=1.4) of 0.1 mol/L-hexane solution of diethylaluminum ethoxide, manufactured by Tosoh Finechem Corporation, was added, followed by stirring at 40°C for 2 hours. After completion of the stirring, the solvent was immediately removed under reduced pressure over 30 minutes to obtain a free flowing diethylaluminum ethoxide compound-supported chromium catalyst free of viscosity and moistness. The catalyst has green color, and this indicates that hexavalent chromium is reduced.

(3) Polymerization

100 mg of the diethylaluminum ethoxide compound-supported chromium catalyst obtained in (2) above and 0.8 L of isobutane were charged in a 2.0 L autoclave sufficiently substituted with nitrogen, and the inner temperature was increased to 94°C. After introducing hydrogen in 0.1 MPa, 4.0 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst. The polymerization was completed by discharging the gas in the autoclave into the outside of the system. Summary of the polymerization conditions is shown in Table 1. Measurement results of physical properties are shown in Table 2.

[Example 4]

(1) Preparation of chromium catalyst

A diethylaluminum ethoxide compound-supported chromium catalyst was prepared in the same manners as in Example 3 (1) and (2), except that the 0.1 mol/L diethylaluminum ethoxide-hexane solution was added in an amount of 4.2 ml (Al/Cr molar ratio=1.0) in place of 5.9 ml (Al/Cr molar ratio=1.4).

(2) Polymerization

100 mg of the diethylaluminum ethoxide compound-supported chromium catalyst obtained in (1) above and 0.8L of isobutane were charged in a 2.0 L autoclave sufficiently substituted with nitrogen, and the inner temperature was increased to 95°C. After introducing hydrogen in 0.1 MPa, 7.5 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst. The polymerization was completed by discharging the gas in the autoclave into the outside of the system. Summary of the polymerization conditions is shown in Table 1. Measurement results of physical properties are shown in Table 2.

[Example 5]

(1) Preparation of chromium catalyst

A diethylaluminum ethoxide compound-supported chromium catalyst was prepared in the same manners as in Example 1 (1) and (2), except that the 0.1 mol/L diethylaluminum ethoxide-hexane solution was added in an amount of 4.2 ml (Al/Cr molar ratio=1.0) in place of 5.9 ml (Al/Cr molar ratio=1.4).

(2) Polymerization

100 mg of the diethylaluminum ethoxide compound-supported chromium catalyst obtained in (1) above and 0.8L of isobutane were charged in a 2.0 L autoclave sufficiently substituted with nitrogen, and the inner temperature was increased to 100°C. 7.0 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst The polymerization was completed by discharging the gas in the autoclave into the outside of the system. Polymerization activity per 1 hour of polymerization time was 2,000 g-polymer/g-catalyst/h. Measurement results of physical properties are shown in Table 2.

[Comparative Example 4]

100 mg of the chromium catalyst obtained in Example 1 (1) and 0.8 L of isobutane were charged in a 2.0 L autoclave sufficiently substituted with nitrogen, and the inner temperature was increased to 100°C. After introducing hydrogen in 0.1 MPa, 5.0 g of 1-hexene was introduced by pressuring with ethylene, and while maintaining such that ethylene partial pressure becomes 1.0 MPa, polymerization was conducted such that catalyst productivity becomes 3,000 g-polymer/g-catalyst. The polymerization was completed by discharging the gas in the autoclave into the outside of the system. The polymerization activity was 1,800 g-polymer/g-catalyst/h. Measurement results of physical properties are shown in Table 2.

[Comparative Example 5]

100 mg of the chromium catalyst obtained in Example 1 (1) and 0.8 L of isobutane were charged in a 2.0 L autoclave sufficiently substituted with nitrogen, and the inner temperature was increased to 100°C. After introducing hydrogen in 0.1 MPa, 3.0 g of 1-hexene was introduced by pressuring with ethylene, and polymerization was conducted such that catalyst productivity becomes 3,000 g-polymer/g-catalyst. The polymerization was completed by discharging the gas in the autoclave into the outside of the system. The polymerization activity was 2,000 g-polymer/g-catalyst/h. Measurement results of physical properties are shown in Table 2.

The results of density and FNCT of the polymers described in Table 2 are shown in Fig. 2. It is generally known that in the polyethylene produced using the same catalyst, FNCT is decreased with increasing a density. Comparative Examples, "HB111R" and "4261AG", are polyethylene in a level that the balance of density-FNCT is equivalent. However, it is seen that the polyethylene of the Examples has far excellent balance level of density-FNCT as compared with the polyethylene of the Comparative Examples. It is considered that from the fact that molecular weight distribution (Mw/Mn) does not greatly change between the polyethylene of the Examples and the polyethylene of the Comparative Examples, the effect that short chain branch distribution in the polyethylene has been improved has appeared. The effect remarkably appears in Example 1. It is seen that the polyethylene of the Examples maintains impact resistance in the level of the commercially available product.

[3] Production of polyethylene in pipe loop type reactor and evaluation

[Example 6]

(1) Polymerization

Isobutane was continuously supplied in a rate of 120 L/h in a pipe loop type reaction having an inner volume of 200 L, and the diethylaluminum ethoxide-supported chromium catalyst obtained in Example 2 was continuously supplied in a rate of 5 g/h in the reactor. While discharging the contents in the reactor in the required rate, ethylene, hydrogen and 1-hexene were supplied such that weight ratio (Hc/ETc) to hydrogen concentration in a liquid phase at 98°C is maintained at $1.1 \times 10^{-3}$, and weight of 1-hexene concentration to ethylene concentration in liquid phase is maintained at 0.22, and polymerization was continuously conducted in a full liquid state under the conditions of total pressure of 3.7 MPa and an average residence time of 0.9 h. Catalyst productivity was 3,200 g-polymer/g-catalyst, and an average polymerization activity was 3,600 g-polymer/g-catalyst/h. Measurement results of physical properties are shown in Table 3.

(2) Molding fuel tank for automobiles

The following resins 1 to 4 were molded under the conditions described below by a coextrusion flow molding apparatus (NB150, manufactured by Japan Steel Works, Ltd.) so as to form a layer constitution described below, and fuel tanks for automobiles were obtained

(Resin used)

1. Polyethylene resin

The polyethylene produced by conducting polymerization using the chromium catalyst was used.

2. Adhesive resin (MAPE)

Maleic anhydride-modified polyethylene having 0.1% by weight of maleic anhydride grafted thereon, manufactured by Japan Polyethylene Corporation, was used.

3. Barrier resin (EVOH)

Ethylene-vinyl alcohol resin EVAL, manufactured by Kurary Co., Ltd., was used.

4. Recycled material layer

In the layer constitution described below, the same resin as the resin constituting the innermost layer was used as the resin of the recycled material layer when starting a test, a fuel tank for automobiles was blow-molded, and a regrind resin obtained by crushing the fuel tank for automobiles was used as a recycled material. Specifically, a recycled material obtained by molding a fuel tank for automobiles having the layer constitution described below and crushing the same was used in the recycled material layer.

Outermost layer: Polyethylene resin of the present invention (layer constitution ratio 11%)
Recycled material layer: Polyethylene resin of the present invention (layer constitution ratio 40%)
Outer adhesive layer: MAPE (layer constitution ratio 3%)
Barrier layer: EVOH (layer constitution ratio 3%)
Inner adhesive layer: MAPE (layer constitution ratio 3%)
Innermost layer: Polyethylene resin of the present invention (layer constitution ratio 40%)

(Molding condition)

Under the following coextrusion multilayer conditions, 4 kinds and 6 layers fuel tank for automobiles having a tank weight of 8 kg and a volume of 60 L was molded under the conditions of a molding temperature of 210°C, a blow mold cooling temperature of 20°C and a cooling time of 180 seconds. A shape of the tank was a saddle type. The layer ratio was that while observing a thickness ratio of the tank, the number of revolution of screws of an extruder was adjusted so as to achieve that the outermost layer is 11%, the second layer is 40%, the third layer is 3%, the fourth layer is 3%, the fifth layer is 3% and the innermost layer is 40%.

Outermost layer (first layer from the outside): diameter 90 mm, L/D=22
Second layer (second layer from the outside): diameter 120 mm, L/D=28
Third layer (third layer from the outside): diameter 50 mm, L/D=22
Fourth layer (fourth layer from the outside): diameter 50 mm, L/D=28
Fifth layer (fifth layer from the outside): diameter 50 mm, L/D=22
Innermost layer (sixth layer from the outside): diameter 120 mm, L/D=241

The fuel tank for automobiles was molded as above, and the evaluation (moldability, drop impact property and gasoline barrier property) of the fuel tank for automobiles was conducted. The results are shown in Table 3.

[Comparative Example 6]

Isobutane was continuously supplied in a rate of 120 L/h to a pipe loop type reactor having an inner volume of 200 L, and the chromium catalyst obtained in Comparative Example 2 was continuously supplied to the reactor in a rate of 5 g/h. While discharging the contents in the reactor in the required rate, ethylene, hydrogen and 1-hexene were supplied so as to maintain that a weight ratio (Hc/ETc) to a hydrogen concentration in a liquid phase at 100°C is $1.1\times10^{-3}$ and a weight ratio of a 1-hexene concentration to an ethylene concentration in a liquid phase is 0.11, and polymerization was continuously conducted in a full liquid state under the conditions of a total pressure of 3.7 MPa and an average residence time of 0.9 h. Catalyst productivity was 2,800 g-polymer/g-catalyst, and the average polymerization activity was 3,100-polymer/g-catalyst/h. A fuel tank for automobiles was molded in the same manner as in Example 6, and the evaluation (moldability, drop impact property and gasoline barrier property) of the fuel tank for automobiles was conducted. Physical properties and the evaluation results of the fuel tank for automobiles are shown in Table 3.

[Comparative Example 7]

A fuel tank for automobiles was molded in the same manner as in Example 6, except that high density polyethylene "HB111R", manufactured by Japan Polyethylene Corporation, was used as the polyethylene resin, and the evaluation (moldability, drop impact property and gasoline barrier property) of the fuel tank for automobiles was conducted. Physical properties and the evaluation results of the fuel tank for automobiles are shown in Table 3.

[Comparative Example 8]

A fuel tank for automobiles was molded in the same manner as in Example 6, except that high density polyethylene "4261AG", manufactured by Basell, was used as the polyethylene resin, and the evaluation (moldability, drop impact property and gasoline barrier property) of the fuel tank for automobiles was conducted. Physical properties and the evaluation results of the fuel tank for automobiles are shown in Table 3.

The relationship between the density and the FNCT of the polymer as described in Table 3 was shown in Fig. 3. It is seen that in the case of Example 6, the balance level of density-FNTC is far excellent as compared with Comparative Examples 6 to 8. It is further seen that the evaluation of the fuel tank for automobiles is good.

[Table 1]

| | Catalyst | | Polymerization condition | | | | | |
|---|---|---|---|---|---|---|---|---|
| | Activation temperature | Al/Cr | Polymerization temperature | Ethylene | Hydrogen | Hexene | Productivity | Activity |
| | °C | | °C | MPa | MPa | g | g/g | g/g/h |
| Example 1 | 500 | 1.4 | 96 | 1 | 0.1 | 8.5 | 3000 | 1800 |
| Example 2 | 500 | 1.2 | 98 | 1 | 0.1 | 6 | 3000 | 2200 |
| Comparative Example 1 | 600 | 0 | 99 | 1 | 0 | 5 | 3000 | 2000 |
| Example 3 | 700 | 1.4 | 94 | 1 | 0.1 | 4 | 3000 | 1900 |
| Example 4 | 700 | 1 | 95 | 1 | 0.1 | 7.5 | 3000 | 2000 |
| Example 5 | 500 | 1 | 100 | 1 | 0 | 7 | 3000 | 2000 |
| Comparative Example 4 | 500 | 0 | 100 | 1 | 0.1 | 5 | 3000 | 1800 |
| Comparative Example 5 | 500 | 0 | 101 | 1 | 0.1 | 3 | 3000 | 2000 |
| Catalyst: Cr=1.1% by weight, specific surface area=500 $m^2/g$, pore volume=1.5 $cm^3/g$ | | | | | | | | |

[Table 2]

| | | Physical properties of polyethylene | | | | | | | | | |
|---|---|---|---|---|---|---|---|---|---|---|---|
| | | Peak position in branching degree distribution curve | Relative ratio Xa of SCB of butyl group or more of fraction of Mw 8,000 to 15,000 | Relative ratio Xb of SCB of butyl group or more of fraction of Mw 200,000 to 400,000 | Density | HLMFR | Mn | Mw | Mw/Mn | Charpy @-40°C | FNCT |
| | | (Mw) | - | - | $g/cm^3$ | g/10 min | $\times 10^{-4}$ | $\times 10^{-4}$ | - | $kJ/m^2$ | hr |
| Example 1 | | 43,000 | 1.06 | 0.97 | 0.9485 | 5.9 | 1.09 | 29.3 | 26.9 | 14.2 | 240 |
| Example 2 | | 56,000 | 1.15 | 0.90 | 0.9480 | 5.3 | 1.13 | 31.8 | 28.1 | 10.9 | 50 |
| Comparative Example 1 | | 27,100 | 1.24 | 0.86 | 0.9444 | 5.9 | 1.65 | 33.4 | 20.2 | 10.0 | 69 |
| Comparative Example 2 | HB111R | 28,500 | 1.28 | 0.84 | 0.9445 | 5.8 | 1.87 | 33.0 | 20.0 | 10.1 | 65 |
| Comparative Example 3 | 4261AG | 18,500 | 1.19 | 0.71 | 0.9450 | 5.4 | 1.50 | 31.9 | 21.0 | 10.2 | 87 |
| Example 3 | | 41,100 | 1.08 | 0.91 | 0.9481 | 5.5 | 1.19 | 29.1 | 24.5 | 10.1 | 25 |
| Example 4 | | 39,800 | 1.11 | 0.93 | 0.9442 | 5.1 | 1.17 | 30.0 | 25.6 | 10.5 | 250 |
| Example 5 | | 48,700 | 1.09 | 0.96 | 0.9479 | 4.8 | 1.06 | 29.3 | 27.6 | 10.0 | 35 |
| Comparative Example 4 | | 28,100 | 1.18 | 0.82 | 0.9442 | 4.7 | 1.53 | 38.5 | 25.2 | 9.2 | 75 |
| Comparative Example 5 | | 27,400 | 1.22 | 0.79 | 0.9478 | 4.5 | 1.55 | 38.0 | 24.5 | 9.4 | 12 |

[Table 3]

| | | Physical properties of polyethylene | | | | | | | | | |
|---|---|---|---|---|---|---|---|---|---|---|---|
| | | Peak position in branching degree distribution curve | Relative ratio Xa of SCB of butyl group or more of fraction of Mw 8,000 to 15,000 | Relative ratio Xb of SCB of butyl group or more of fraction of Mw 200,000 to 400,000 | Density | HLMFR | Mn | Mw | Mw/Mn | Charpy @-40°V | FNCT |
| | | (Mw) | - | - | $g/cm^3$ | g/10 min | $\times 10^{-4}$ | $\times 10^{-4}$ | - | $kJ/m^2$ | hr |
| Example 6 | | 45,200 | 1.11 | 0.96 | 0.9488 | 4.6 | 1.1 | 31.2 | 28.4 | 10.3 | 90 |
| Comparative Example 6 | | 26,800 | 1.24 | 0.80 | 0.9480 | 4.5 | 1.47 | 33.3 | 22.6 | 10.1 | 15 |
| Comparative Example 7 | HB111R | 28,500 | 1.28 | 0.84 | 0.9445 | 5.8 | 1.9 | 33.0 | 20.0 | 10.1 | 65 |
| Comparative Example 8 | 4261AG | 18,500 | 1.19 | 0.71 | 0.9450 | 5.4 | 1.5 | 31.9 | 21.0 | 10.2 | 87 |

[Table 3 Cont'd]

| | Evaluation of molding of fuel tank for automobiles | | |
|---|---|---|---|
| | Moldability | Drop impact property | Gasoline barrier property |
| Example 6 | Good | Good | Excellent |
| Comparative Example 6 | Fair | Good | Excellent |
| Comparative Example 7 | Excellent | Excellent | Excellent |
| Comparative Example 8 | Excellent | Good | Excellent |

Although the present invention has been described in detail and by reference to the specific embodiments, it is apparent to one skilled in the art that various modifications or changes can be made without departing the spirit and scope of the present invention.

This application is based on Japanese Patent Application No. 2010-287401 filed December 24, 2010, the disclosure of which is incorporated herein by reference.

Industrial Applicability

By molding a hollow plastic molding using the polyethylene of the present invention, the polyethylene can have excellent moldability, durability and barrier property and excellent balance between rigidity and durability, is preferably used in fuel tanks, particularly, a fuel tank for automobiles. Therefore, industrial significance is high.

## Claims

1. Polyethylene which is polymerized using a chromium catalyst, and has a ratio (Mw/Mn) of a weight average molecular weight (Mw) to a number average molecular weight (Mn) of 20 to 40 and a weight average molecular weight (Mw) of 30,000 or more at the maximum value in a branching degree distribution curve that shows a molecular weight dependency of short chain branches having 4 or more carbon atoms, wherein
the chromium catalyst is obtained by calcining and activating an inorganic oxide support having a chromium compound supported thereon at from 400 to 900°C in a non-reducing atmosphere to convert at least a part of chromium atoms into hexavalent atoms, supporting dialkylaluminum alkoxide in an inert hydrocarbon solvent, and removing the solvent and drying, and
the number of short chain branches having 4 or more carbon atoms per 1,000 carbons in the main chain of the polyethylene is 3.0 or less, and
the branching degree distribution curve is that when a relative ratio of the number of branches having 4 or more carbon atoms in a fraction having Mw of from 8,000 to 15,000 is Xa, and a relative ratio of the number of branches having 4 or more carbon atoms in a fraction having Mw of from 200,000 to 400,000 is Xb, those relative ratios satisfy the following formulae (A) and (B), respectively:

$$0.60 \leq Xa \leq 1.20 \quad (A)$$

$$0.80 \leq Xb \leq 1.40 \quad (B)$$

2. The polyethylene according to claim 1, having a density of from 0.940 to 0.960 g/cm$^3$.

3. The polyethylene according to claim 1 or 2, wherein the number of short chain branches having 4 or more carbon atoms per 1,000 carbons in main chain is 3.0 or less.

4. The polyethylene according to claim 1, wherein in the chromium catalyst, a molar ratio of dialkylaluminum alkoxide to chromium atoms is from 0.5 to 10.0.

5. The polyethylene according to claim 1, wherein the inorganic oxide support is silica.

6. A hollow plastic molding comprising the polyethylene according to any one of claims 1 to 5.

7. The hollow plastic molding according to claim 6, which is at least one selected from the group consisting of a fuel tank, a kerosene can, a drum, a container for chemicals, an agricultural container, a container for solvent and a plastic bottle.

## Patentansprüche

1. Polyethylen, das unter Verwendung eines Chromkatalysators polymerisiert ist und ein Verhältnis (Mw/Mn) eines gewichtsgemittelten Molekulargewichts (Mw) zu einem zahlengemittelten Molekulargewicht (Mn) von 20 bis 40 und ein gewichtsgemitteltes Molekulargewicht (Mw) von 30.000 oder mehr bei einem Maximalwert in einer Verzweigungsgradverteilungskurve aufweist, die eine Molekulargewichtsabhängigkeit der Kurzkettenverzweigungen mit 4 oder mehr Kohlenstoffatomen darstellt, wobei
der Chromkatalysator durch Kalzinieren und Aktivieren eines anorganischen Oxidträgers mit einer darauf geträgerten Chromverbindung bei 400 bis 900°C in einer nicht reduzierenden Atmosphäre, um zumindest einen Teil der Chromatome zu hexavalenten Atomen umzuwandeln,
Trägern von Dialkylaluminiumalkoxid in einem inerten Kohlenwasserstofflösungsmittel und Entfernen des Lösungsmittels und Trocknen erhalten wird, und
die Zahl der Kurzkettenverzweigungen mit 4 oder mehreren Kohlenstoffatomen pro 1.000 Kohlenstoffatomen in der Hauptkette des Polyethylens 3,0 oder weniger beträgt und die Verzweigungsgradverteilungskurve so ist, dass wenn ein relativer Anteil der Zahl der Verzweigungen mit 4 oder mehr Kohlenstoffatomen in einer Fraktion mit einem Mw von 8.000 bis 15.000 Xa ist und ein relativer Anteil der Zahl der Verzweigungen mit 4 oder mehr Kohlenstoffatomen in einer Fraktion mit einem Mw von 200.000 bis 400.000 Xb ist, diese relativen Anteile die folgende Formel (A) bzw. (B) erfüllen:

$$0{,}60 \leq Xa \leq 1{,}20 \qquad (A)$$

$$0{,}80 \leq Xb \leq 1{,}40 \qquad (B)$$

2. Polyethylen gemäß Anspruch 1 mit einer Dichte von 0,940 bis 0,960 g/cm$^3$.

3. Polyethylen gemäß Anspruch 1 oder 2, wobei die Zahl an Kurzkettenverzweigungen mit 4 oder mehr Kohlenstoffatomen pro 1.000 Kohlenstoffatome in der Hauptkette 3,0 oder weniger beträgt.

4. Polyethylen gemäß Anspruch 1, wobei in dem Chromkatalysator das Molverhältnis von Dialkylaluminiumalkoxid zu Chromatomen 0,5 bis 10,0 beträgt.

5. Polyethylen gemäß Anspruch 1, wobei der anorganische Oxidträger Silica ist.

6. Kunststoffformhohlteil umfassend das Polyethylen gemäß irgendeinem der Ansprüche 1 bis 5.

7. Kunststoffformhohlteil gemäß Anspruch 6, das mindestens eines, ausgewählt aus der Gruppe bestehend aus einem Kraftstofftank, einer Petroleumkanne, einem Fass, einem Behälter für Chemikalien, einem landwirtschaftlichen Behälter, einem Behälter für Lösungsmittel und einer Kunststoffflasche, ist.

**Revendications**

1. Polyéthylène qui est polymérisé en utilisant un catalyseur de chrome, et présente un rapport (Mw/Mn) d'un poids moléculaire moyen en poids (Mw) sur un poids moléculaire moyen en nombre (Mn) de 20 à 40 et un poids moléculaire moyen en poids (Mw) de 30 000 ou plus à la valeur maximale dans une courbe de distribution de degré de ramification qui montre une dépendance de poids moléculaire de ramifications à chaîne courte ayant 4 ou plus atomes de carbone, dans lequel
le catalyseur de chrome est obtenu en calcinant et en activant un support d'oxyde inorganique ayant un composé de chrome supporté par celui-ci de 400 à 900°C dans une atmosphère non réductrice afin de convertir au moins une partie des atomes de chrome en atomes hexavalents, en servant de support à un alcoxyde de dialkylaluminium dans un solvant hydrocarboné inerte, et en éliminant le solvant et en séchant, et
le nombre de ramifications à chaîne courte ayant 4 ou plus atomes de carbone pour 1000 atomes de carbone dans la chaîne principale du polyéthylène est de 3 ou moins, et
la courbe de distribution de degré de ramification est telle que lorsqu'un rapport relatif du nombre de ramifications ayant 4 ou plus atomes de carbone dans une fraction ayant un Mw de 8 000 à 15 000 est Xa, et un rapport relatif du nombre de ramifications ayant 4 ou plus atomes de carbone dans une fraction ayant un Mw allant de 200 000 à 400 000 est Xb, lesdits rapports relatifs satisfont aux formules (A) et (B) suivantes, respectivement :

$$0{,}60 \leq Xa \leq 1{,}20 \qquad (A)$$

$$0{,}80 \leq Xb \leq 1{,}40 \qquad (B)$$

2. Polyéthylène selon la revendication 1, ayant une densité de 0,940 à 0,960 g/cm$^3$.

3. Polyéthylène selon la revendication 1 ou 2, dans lequel le nombre de ramifications à chaîne courte ayant 4 ou plus atomes de carbone pour 1000 atomes de carbone dans la chaîne principale est de 3 ou moins.

4. Polyéthylène selon la revendication 1, dans lequel dans le catalyseur de chrome, un rapport molaire d'alcoxyde de dialkylaluminium aux atomes de chrome est de 0,5 à 10.

5. Polyéthylène selon la revendication 1, dans lequel le support d'oxyde inorganique est de la silice.

6. Moulage creux en matière plastique comprenant le polyéthylène selon l'une quelconque des revendications 1 à 5.

7. Moulage creux en matière plastique selon la revendication 6, qui est au moins un élément choisi dans le groupe constitué d'un réservoir de carburant, un bidon de kérosène, un baril, un récipient pour produits chimiques, un récipient agricole, un récipient pour solvant et une bouteille en matière plastique.

FIG. 1

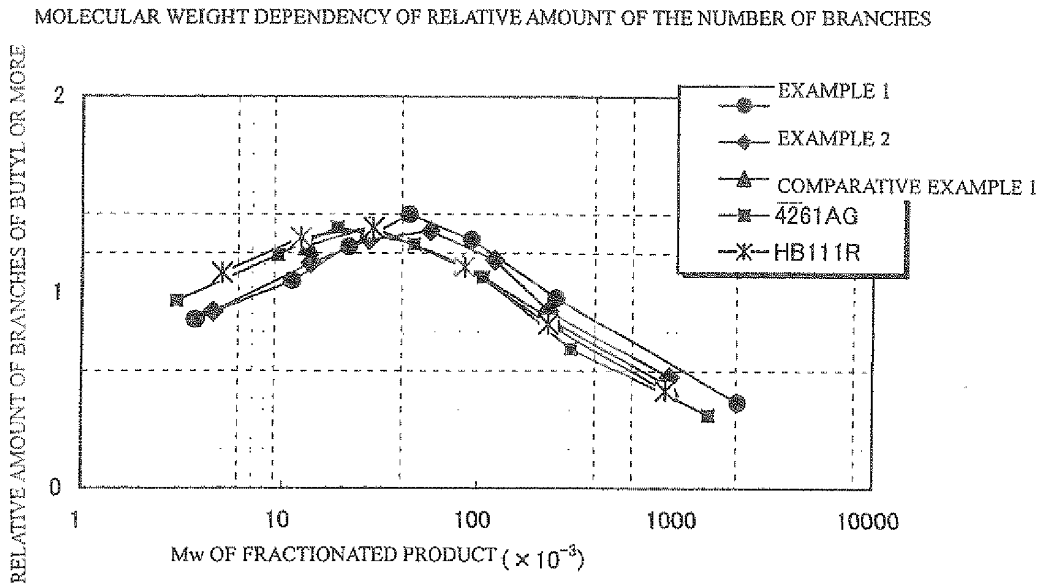
MOLECULAR WEIGHT DEPENDENCY OF RELATIVE AMOUNT OF THE NUMBER OF BRANCHES
RELATIVE AMOUNT OF BRANCHES OF BUTYL OR MORE
2
1
0
1
10
100
1000
10000
Mw OF FRACTIONATED PRODUCT (× 10⁻³)
EXAMPLE 1
EXAMPLE 2
COMPARATIVE EXAMPLE 1
4261AG
HB111R

FIG. 2

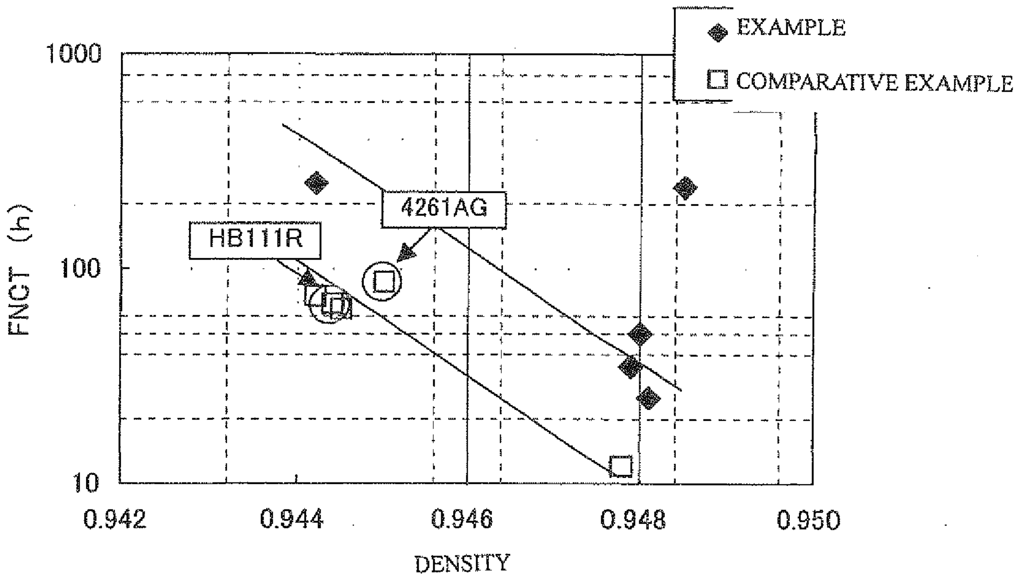
EXAMPLE
COMPARATIVE EXAMPLE
1000
100
10
FNCT (h)
4261AG
HB111R
0.942
0.944
0.946
0.948
0.950
DENSITY

FIG. 3

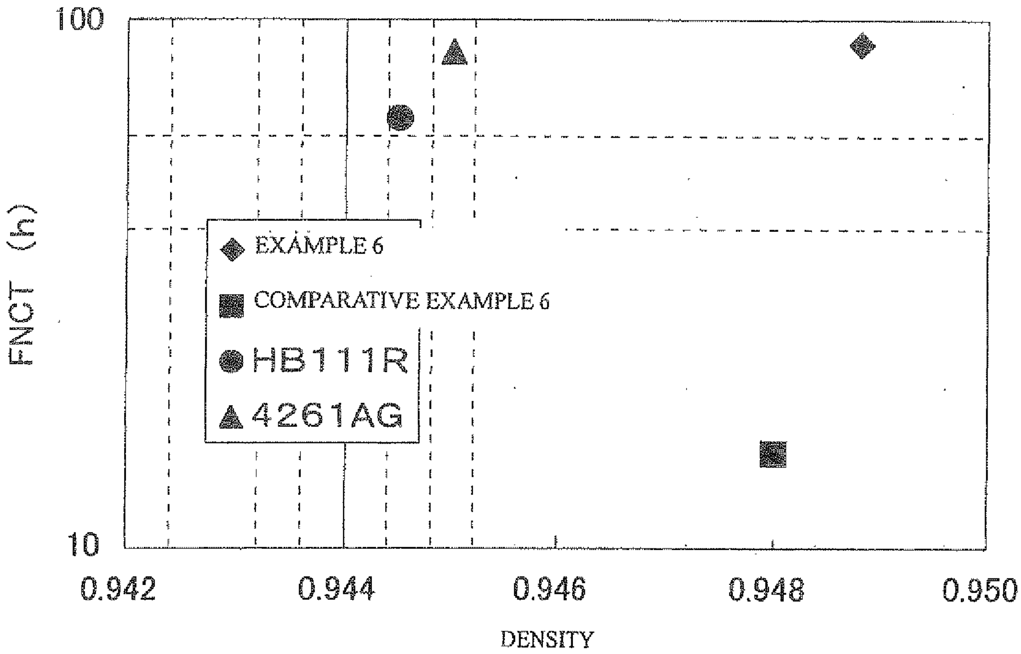
100
10
FNCT (h)
EXAMPLE 6
COMPARATIVE EXAMPLE 6
HB111R
4261AG
0.942
0.944
0.946
0.948
0.950
DENSITY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004504416 T
- JP 2006512454 T
- WO 9413708 A
- JP 2002080521 A
- JP 2002020412 A
- JP 2003096127 A
- JP 2003183287 A
- JP 2003313225 A
- JP 2006182917 A
- JP 2009173889 A
- WO 0061645 A
- US 6867278 B
- US 6875835 B
- US 6525148 B
- JP 2010287401 A


### Non-patent literature cited in the description


- *Polym. Eng. Sci.,* 2005, vol. 45, 1203
- *J. Polym. Sci., Part A Polym. Chem.,* 2007, vol. 45, 3135
- *Macromolecules,* 1999, vol. 32 (11), 3817
- **M. P. MCDANIEL.** *Advances in Catalysis,* 1985, vol. 33, 47
- **M. P. MCDANIEL.** Handbook of Heterogeneous Catalysts. VCH, 1977, 2400
- **M. B. WELCH et al.** Handbook of Polyolefins: Synthesis and Properties. Marcel Dekker, 1993, 21
- **C. E. MARSDEN.** Preparation of Catalysts. Elsevier Science Publishers, 1991, vol. V, 215
- **C. E. MARSDEN.** *Plastics, Rubber and Composites Processing and Applications,* 1994, vol. 21, 193
- **V. J. RUDDICK et al.** *J. Phys. Chem.,* 1996, vol. 100, 11062
- **S. M. AUGUSTINE et al.** *J. Catal.,* 1996, vol. 161, 641
- **T. PULLUKAT et al.** *J. Polym. Sci., Polym. Chem. Ed.,* 1980, vol. 18, 2857
- **M. P. MCDANIEL et al.** *J. Catal.,* 1983, vol. 82, 118
- **T. MOLE et al.** Organoaluminum Compounds. Elsevier, 1972
- **M. TERANO et al.** *J. Mol. Catal. A: Chemical,* 2005, vol. 238, 142
- **M. P. MCDANIEL et al.** *J. Phys. Chem.,* 1991, vol. 95, 3289
- **T. MONOI et al.** *Polym. J.,* 2003, vol. 35, 608
- **O. ESPELID et al.** *J. Catal.,* 2000, vol. 195, 125
- **KAZUO MATSUURA ; NAOTAKA MIKAMI.** Technical Handbook for Polyethylene. Kogyo Chosakai Publishing Co., Ltd, 2001, 148
- **J. SCHEIRS ; W. KAMINSKY.** Metallocene-based Polyolefins. John Wiley & Sons, 2000, vol. 2, 365
- **KAZUO MATSUURA ; NAOTAKA MIKAMI.** Technical Handbook for Polyethylene. Kogyo Chosakai Publishing Co., Ltd, 2001, 134
- Technical Handbook for Polyethylene. 103-104
- Technical Handbook for Polyethylene. 156-157